# EUROPEAN PATENT APPLICATION

(11) **EP 4 660 600 A1**
(43) Date of publication of application: **10.12.2025**
(21) Application number: 24852983.6
(22) Date of filing: 28.04.2024
(51) Int. Cl.: G01L 1/22, G01L 5/161

(54) **STRAIN GENERATION STRUCTURES AND FORCE SENSOR**

(30) Priority: 25.04.2024 CN 202410503428
(71) Applicant: Suzhou Sac Automotive Technology Co., Ltd, Suzhou, Jiangsu 215123 (CN)
(72) Inventor: CHEN, Jian, Suzhou, Jiangsu 215123 (CN); YANG, Weidong, Suzhou, Jiangsu 215123 (CN); ZHAO, Xiaodong, Suzhou, Jiangsu 215123 (CN); QI, Fuwei, Suzhou, Jiangsu 215123 (CN); ZHU, Penghao, Suzhou, Jiangsu 215123 (CN); CHEN, Xuetao, Suzhou, Jiangsu 215123 (CN)
(74) Representative: Wang, Bo
(86) International application number: PCT/CN2024/090321
(87) International publication number: WO 2025/222529

(57) **Abstract**

The embodiments of the present invention provides a strain-generating structure and a force sensor. The strain-generating structure comprises at least one strain body configured to generate strain under an external force. A surface of the at least one strain body is provided with at least one concave-convex structure. The at least one concave-convex structure is provided with a concave portion and a convex portion adjacent to the concave portion. The convex portion of the at least one concave-convex structure is provided with at least one strain gauge. The at least one strain gauge is configured to sense the strain. The strain-generating structure has a datum plane perpendicular to an axis of the strain-generating structure. Each of the at least one strain gauge is disposed parallel to the datum plane. The strain-generating structure attaches the strain gauges to a plane that facilitates operation of the machine and considers the detection performance of a six-dimensional force sensor.

## Description

### TECHNICAL FIELD

The present invention relates to the technical field of force sensing, and in particular to a strain-generating structure and a force sensor.

### BACKGROUND

With the continuous deepening of the research of artificial intelligence (Al) technology, more and more platforms equipped with artificial intelligence technology have been developed rapidly, in which the robotics industry, as a pyramid tip of the industrial field, has gradually become a hot spot of development and research with the assistance of AI technology in recent years. The field of humanoid robots in the robotics industry is the optimal platform for carrying AI, and the humanoid robots together with the industry of supporting parts and components have developed rapidly, pending to become another scale, platform, and high value-added emerging industry following the new energy automobile industry.

There are still a lot of technical difficulties in the industrialization of humanoid robots, one of which is the development, design and scale production of a spatial six-dimensional force sensors. The six-dimensional force sensor can collect the force in the direction of X, Y and Z axes and the torque around the three axes. In principle, the six-dimensional force sensor mainly builds a Wheatstone bridge using the resistance change effect after the deformation of a resistance strain gauge and collect the change of voltage on the bridge, so as to obtain a corresponding relationship between the output voltage and the strain, and then determine a corresponding relationship between the output voltage and the force and/or the toque through a calibration technology.

However, due to the high technical threshold of application scenarios, the six-dimensional force sensor is not involved in the civilian field, the product usage is insufficient, and large-scale production cannot be formed, so the product unit price is high. The humanoid robots have the potential for large-scale industrialization, and are also for the civilian field. In order to match the industry specificity of the humanoid robots, it is necessary to develop a new six-dimensional force sensor to reduce the production difficulty and improve the product yield of the six-dimensional force sensor while considering the product performance and technical indexes.

### SUMMARY

Therefore, the present invention is desirable to provide an improved strain-generating structure and a force sensor to solve at least one of the above problems.

In the first aspect, the present invention provides a strain-generating structure, comprising at least one strain body configured to generate strain under an external force. A surface of the at least one strain body may be provided with at least one concave-convex structure. The at least one concave-convex structure may be provided with a concave portion and a convex portion adjacent to the concave portion. The convex portion of the at least one concave-convex structure may be provided with at least one strain gauge. The at least one strain gauge may be configured to sense the strain generated by the at least one strain body. The strain-generating structure may have a datum plane perpendicular to an axis of the strain-generating structure. Each of the at least one strain gauge of the strain-generating structure may be disposed parallel to the datum plane.

According to the strain-generating structure provided in the present invention, by providing all strain gauges to be parallel to the datum plane, the subsequent surface mounting process can be completed using the machine, greatly which reduces the production difficulty and improves the production efficiency and the product yield rate of the six-dimensional force sensor. In addition, by providing at least one concave-convex structure on the surface of the at least one strain body equipped with the at least one strain gauge, the at least one strain body has different stress distributions at the concave portion and the convex portion of the concave-convex structure when the external force is applied, such that a portion of the at least one strain body close to the concave portion experiences relatively small strain while a portion the at least one strain body away from the concave portion experiences relatively large strain. In this case, a portion of the at least one strain gauge located at the convex portion of the concave-convex structure can obtain a certain degree of available strain to output an electrical signal of a certain intensity, which ensures the detection performance of the six-dimensional force sensor while the at least one strain gauge is parallel to the datum plane.

In the second aspect, the present invention provides a strain-generating structure, comprising at least one strain body configured to generate strain under an external force. The at least one the strain body may have at least one target surface perpendicular to an axis of the strain-generating structure. At least one concave portion may be disposed on the at least one target surface. At least one strain gauge may be disposed on a non-concave portion. The at least one strain gauge may be configured to sense the strain generated by the at least one strain body. No strain gauge may be disposed on a non-target surface of each of the at least one strain body.

According to the strain-generating structure provided in the present invention, by providing all strain gauges disposed on a non-concave portion disposing on at least one target surface perpendicular to an axis of the strain-generating structure, while no strain gauge disposed on a non-target surface, the subsequent surface mounting process can be completed using the machine, greatly which reduces the production difficulty and improves the production efficiency and the product yield rate of the six-dimensional force sensor. In addition, by providing at least one concave portion on the surface of the at least one strain body equipped with the at least one strain gauge, the at least one strain body has different stress distributions at the concave portion and the non-convex portion when the external force is applied, such that a portion of the at least one strain body close to the concave portion experiences relatively small strain while a portion the at least one strain body away from the concave portion experiences relatively large strain. In this case, a portion of the at least one strain gauge located at the target surface out of the concave portion can obtain a certain degree of available strain to output an electrical signal of a certain intensity, which ensures the detection performance of the six-dimensional force sensor while the at least one strain gauge is disposed to the target surface.

In the third aspect, the present invention provides a strain-generating structure, comprising a first rigid body, a second rigid body, and at least one strain body connected between the first rigid body and the second rigid body. The at least one strain body may be configured to generate strain under an external force. The at least one strain body, and a portion of the first rigid body and a portion of the second rigid body connected with the at least one strain body may form pathways for transmitting at least one of a force or a torque between the first rigid body and the second rigid body. At least one concave portion may be provided on at least one of the pathways, and the at least one strain gauge may be provided on a non-concave portion. The at least one strain gauge may be disposed on the at least one strain body and configured to sense the strain generated by the at least one strain body. The strain-generating structure may have a datum plane perpendicular to an axis of the strain-generating structure. Each of the at least one strain gauge of the strain-generating structure may be disposed parallel to the datum plane.

According to the strain-generating structure provided in the present invention, by providing all strain gauges to be parallel to the datum plane, the subsequent surface mounting process can be completed using the machine, greatly which reduces the production difficulty and improves the production efficiency and the product yield rate of the six-dimensional force sensor. In addition, by forming pathways for transmitting at least one of a force or a torque between the first rigid body and the second rigid body, at least one concave portion may be provided on at least one of the pathways, and at least one strain gauge may be disposed on a non-concave portion, such that a portion of the at least one strain body close to the concave portion experiences relatively small strain while a portion the at least one strain body away from the concave portion experiences relatively large strain. In this case, a portion of the at least one strain gauge located out of the convex portion can obtain a certain degree of available strain to output an electrical signal of a certain intensity, which ensures the detection performance of the six-dimensional force sensor while the at least one strain gauge is parallel to the datum plane.

In the fourth aspect, the present invention provides a strain-generating structure, comprising at least one strain body. The at least one strain body may include a strain beam. The strain beam may be configured to generate strain under an external force. At least one concave portion may be disposed on a surface of the at least one strain body and at least one strain gauge may be disposed on a non-concave portion. Each of the at least one strain gauge may be disposed on the strain beam and configured to sense the strain of the strain beam. The at least one concave portion may satisfy the following equation: 0.001H ≤ D ≤ 0.8H, A ≥ W, wherein D denotes a depth of the at least one concave portion, A denotes a width of the at least one concave portion, H denotes a height of the strain beam, and W denotes a width of the strain beam. The strain-generating structure may have a datum plane perpendicular to an axis of the strain-generating structure. Each of the at least one strain gauge of the strain-generating structure may be disposed parallel to the datum plane.

According to the strain-generating structure provided in the present invention, by providing all strain gauges to be parallel to the datum plane, the subsequent surface mounting process can be completed using the machine, greatly which reduces the production difficulty and improves the production efficiency and the product yield rate of the six-dimensional force sensor. In addition, by providing at least one concave portion on the surface of the strain beam equipped with the at least one strain gauge, and the at least one concave portion satisfying the above equation, the at least one strain body has different stress distributions at the concave portion and the non-convex portion when the external force is applied, such that a portion of the at least one strain beam close to the concave portion experiences relatively small strain while a portion the at least one strain beam away from the concave portion experiences relatively large strain. In this case, a portion of the at least one strain gauge located at the non-concave portion can obtain a certain degree of available strain to output an electrical signal of a certain intensity, which ensures the detection performance of the six-dimensional force sensor while the at least one strain gauge is disposed to the datum plane.

In the fifth aspect, the present invention provides a preparation method of a strain-generating structure. The strain-generating structure may include at least one strain body, a first rigid body connected with one end of the at least one strain body, and a second rigid body connected with the other end of the at least one strain body. The preparation method may comprise: providing at least one through groove in a substrate to form the first rigid body and the second rigid body spaced apart and the at least one strain gauge connecting the first rigid body and the second rigid body; thinning a portion of a region of the at least one strain body to form at least one concave-convex structure; and attaching all of the at least one strain gauge to a convex portion of the at least one concave-convex structure in a way of being parallel to a datum plane. The at least one strain gauge may be configured to sense the strain generated by the at least one strain body. The datum plane may be perpendicular to an axis of the strain-generating structure.

According to the preparation method of a strain-generating structure provided in the present invention, by attaching all of the at least one strain gauge to a strain body in a way of being parallel to a datum plane, the difficulty of surface mounting can be reduced significantly, greatly which improves the production efficiency and the product yield rate of the six-dimensional force sensor. In addition, by thinning a portion of a region on the surface of the at least one strain body to form at least one concave-convex structure equipped with the at least one strain gauge, the at least one strain body has different stress distributions at the concave portion and the convex portion of the concave-convex structure when the external force is applied, such that a portion of the at least one strain body close to the concave portion experiences relatively small strain while a portion the at least one strain body away from the concave portion experiences relatively large strain. In this case, a portion of the at least one strain gauge located at the convex portion of the concave-convex structure can obtain a certain degree of available strain to output an electrical signal of a certain intensity, which ensures the detection performance of the six-dimensional force sensor while the at least one strain gauge is parallel to the datum plane.

In the sixth aspect, the present invention provides a force detection module, comprising any of the strain-generating structure as described above, and a measurement circuit coupled with each of the at least one strain gauge of the strain-generating structure. The measurement circuit may be configured to measure a direction and a magnitude of at least one of a force or a toque applied to the strain-generating structure based on an electrical signal from the at least one strain gauge.

In the seventh aspect, the present invention provides a force sensor, comprising any of the force detection module as described above.

In the eighth aspect, the present invention provides a robot, comprising a force sensor disposed at a position of at least one joint, a robotic arm, or a robotic tie rod of a robot as described above.

### BRIEF DESCRIPTION OF THE DRAWINGS

In order to more clearly illustrate the technical solutions of the embodiments of the present invention or the prior art, the accompanying drawings required to be used in the description of the embodiments are briefly described below. Obviously, the accompanying drawings in the following description are only some examples or embodiments of the present invention, and it is possible for a person of ordinary skill in the art to apply the present invention to other similar scenarios in accordance with these drawings without creative labor. Unless obviously obtained from the context or the context illustrates otherwise, the same numeral in the drawings refers to the same structure or operation, where:
FIG. 1 is a schematic diagram illustrating a top view of a strain-generating structure according to one embodiment of the present invention;
FIG. 2 is a schematic diagram illustrating a side view of a first concave-convex structure according to one embodiment of the present invention;
FIG. 3 is a schematic diagram illustrating a side view of a second concave-convex structure according to one embodiment of the present invention;
FIG. 4 is a schematic diagram illustrating a side view of a third concave-convex structure according to one embodiment of the present invention;
FIG. 5 is a schematic diagram illustrating a side view of a fourth concave-convex structure according to one embodiment of the present invention;
FIG. 6 is a schematic diagram illustrating a side view of a combined concave portion according to one embodiment of the present invention;
FIG. 7 is a schematic diagram illustrating a top view of a strain-generating structure according to another embodiment of the present invention;
FIG. 8 is a schematic diagram illustrating a side view of a combined convex portion according to one embodiment of the present invention;
FIG. 9 is a schematic diagram illustrating a reference plane according to one embodiment of the present invention;
FIG. 10 is a schematic diagram illustrating each orthographic projection on a reference plane according to one embodiment of the present invention;
FIG. 11 is a schematic diagram illustrating a top view of a strain-generating structure according to another embodiment of the present invention;
FIG. 12 is a schematic diagram illustrating a side view of at least one strain body according to one embodiment of the present invention;
FIG. 13 is a schematic structural diagram illustrating a strain-generating structure according to Embodiment 1 of the present invention;
FIG. 14 is a schematic diagram illustrating deformation of a strain beam when a strain-generating structure is subjected to a force/torque parallel to an XY plane according to Embodiment 1 of the present invention;
FIG. 15 is a schematic diagram illustrating deformation of a strain beam when a strain-generating structure is subjected to a force/torque perpendicular to an XY plane according to Embodiment 1 of the present invention;
FIG. 16 is a schematic structural diagram illustrating a strain-generating structure according to Embodiment 2 of the present invention;
FIG. 17 is a schematic diagram illustrating a side view of various variations of a strain beam according to optional Embodiment 3 of the present invention;
FIG. 18 is a schematic diagram illustrating an exemplary type and an exemplary connection type of a resistance strain gauge according to optional Embodiment 4 of the present invention;
FIG. 19 is a schematic diagram illustrating a top view of a strain-generating structure according to another embodiment of the present invention;
FIG. 20 is a schematic diagram illustrating an enlargement of a portion K in FIG. 19;
FIG. 21 is a schematic structural diagram illustrating a PCB according to one embodiment of the present invention; and
FIG. 22 is a schematic diagram illustrating wiring of a force detection module according to one embodiment of the present invention.

### DETAILED DESCRIPTION

In order to make the above objectives, features and advantages of the present invention more obvious and understandable, the following description of embodiments of the present invention is made in detail with reference to the accompanying drawings. Many specific details are set forth in the following description in order to facilitate a full understanding of the present invention. However, the present invention is capable of being implemented in many other ways than those described herein, and those skilled in the art can make similar improvements without violating the connotations of the present invention. Therefore, the present invention is not limited by the embodiments disclosed below.

In the description of the present invention, it is to be understood that the terms "center," "longitudinal," "transverse," "length," "width," "thickness," "upper," "lower," "front," "back," "left," "right," "vertical," "horizontal," "top," "bottom," "inside," "outside," "clockwise," "counterclockwise," "axial," "radial," "circumferential," etc. indicate orientation or positional relationships based on those shown in the accompanying drawings, and are intended only to facilitate description of the present invention and simplify the description, and are not intended to indicate or imply that the device or element referred to must have a particular orientation, be constructed and operated in a particular orientation, and therefore are not to be construed as a limitation of the present invention.

In addition, the terms "first" and "second" are used only for descriptive purposes and are not to be construed as indicating or implying relative importance or implicitly specifying the number of technical features indicated. Thereby, a feature defined as "first," "second" may expressly or impliedly include at least one of the features. In the description of the present invention, "plurality" means at least two, e.g., two, three, etc., unless otherwise explicitly and specifically limited.

It should be noted that when an element is said to be "fixed to" or "set on" another element, it can be directly on another element or there can be a centered element. When an element is said to be "attached" to another element, it may be directly attached to the other element or there may be both centered elements. As used herein, the terms "vertical," "horizontal," "up," "down," "left," "right," and similar expressions are used herein for illustrative purposes only and do not indicate the only embodiment.

In the course of realizing the present invention, the inventors found that a conventional six-dimensional force sensor has the following problems:
(1) Low productivity and yield rate. An elastomer component of the six-dimensional force sensor is used to carry multi-dimensional forces and torques and transfer the deformation to a resistance strain gauge through a beam structure, which is the core part of the mechanical structure design of the six-dimensional force sensor. The elastomer component has various structures, such as a T-beam structure, a four-beam structure, an eight-beam structure, an E-membrane structure, a three-beam structure, etc., of which the three-beam structure has the advantages of structural stability, low processing difficulty, and the ability to realize miniaturization, and gradually becomes the mainstream application structure in commercial products. However, the current three-beam structure requires that the four surfaces of each strain beam need to be provided with resistance strain gauges, and the resistance strain gauges on the opposite sides of each strain beam are connected in series to form a half-bridge, and the resistance strain gauges on the side must be manually mounted, which results in low production efficiency and low yield rate.
(2) Low product adaptation. The current commercialization of the six-dimensional force sensor mostly uses a silicon-based semiconductor material as the substrate of the resistance strain gauge. The silicon-based semiconductor material has the advantages of high tensile strength, high sensitivity coefficient, performance stability, etc., but the difficulty lies in the processing and production that require the processes of the chip field, such as chip slicing, photolithography, corrosion, vapor deposition, etc. Therefore, the resistance strain gauge used in the current six-dimensional force sensor mostly comes from externally procured bulk products, which are monomer resistors, have low integration, and relatively long axial dimension, resulting in a poor degree of adaptation to the six-dimensional force sensor product.

Based on the above problems, the present invention presents a new design of a six-dimensional force sensor based on the following inventive concept. First, each strain gauge on the elastomer component is adhered to a plane which is convenient for machine operation; secondly, the structure of the elastomer component is improved such that when an external force is applied, the elastomer component can generate strain on the plane to which each strain gauge is attached that is sufficient to be utilized by a bridge circuit constructed from each strain gauge; and finally, the strain formed on the plane to which each strain gauge is attached under the influence of the external force exhibits a determinable trend of change.

Based on the foregoing inventive concept, some embodiments of the present invention provide an improved strain-generating structure. By providing all strain gauges to be parallel to a datum plane, a subsequent surface mounting process can be completed using a machine, which greatly reduces the production difficulty and improving the production efficiency and the product yield rate of the six-dimensional force sensor. In addition, by providing at least one concave-convex structure on the surface of at least one strain body equipped with the strain gauges, the at least one strain body has different stress distributions at the concave and convex portions of the at least one concave-convex structure when the external force is applied, such that a portion of the at least one strain body close to the concave portion experiences relatively small strain while a portion of the at least one strain body away from the concave portion experiences relatively large strain. In this case, a portion of the at least one strain gauge located at the convex portion of the at least one concave-convex structure can obtain a certain degree of available strain and thus output an electrical signal of a certain intensity, which ensures the detection performance of the six-dimensional force sensor while the strain gauges are arranged parallel to the datum plane.

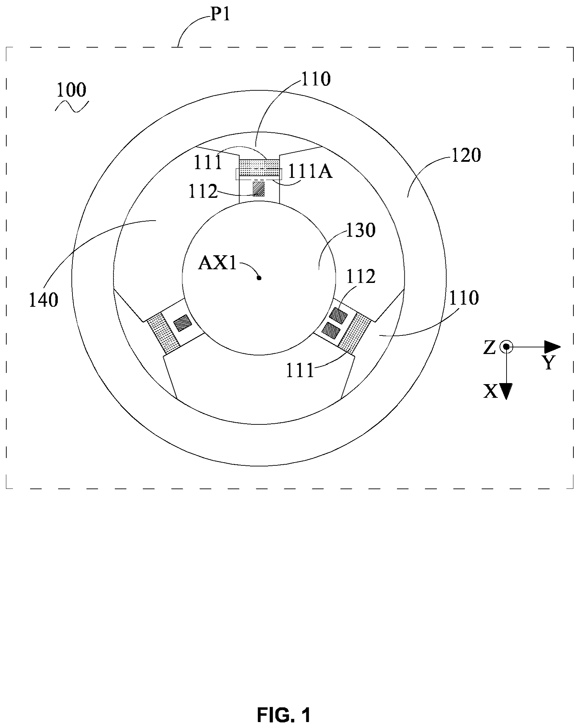

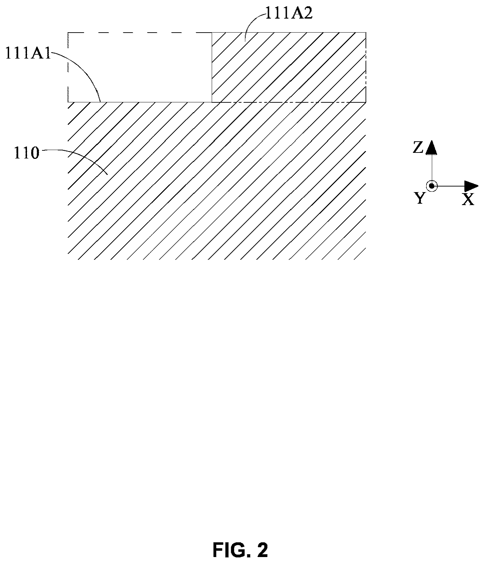

As shown in FIG. 1 and FIG. 2, some embodiments of the present invention provide a strain-generating structure 100. The strain-generating structure 100 may include at least one strain body 110. The at least one strain body 110 may be configured to generate strain under an external force. At least one concave-convex structure 111A may be disposed on a surface of the at least one strain body 110. The at least one concave-convex structure 111A may include a concave portion 111A1 and a convex portion 111A2 adjacent to the concave portion 111A1. The convex portion 111A2 of the at least one concave-convex structure may be provided with at least one strain gauge 112. The at least one strain gauge 112 may be configured to sense the strain generated by the at least one strain body 110. In addition, the strain-generating structure 100 may have a datum plane P1 perpendicular to an axis AX1 of the strain-generating structure 100. Each of the at least one strain gauge 112 of the strain-generating structure 100 may be arranged parallel to the datum plane P1.

For example, in the at least one concave-convex structure 111A, the concave portion 111A1 represents a portion of the surface of the at least one strain body 110 that is concave, and the convex portion 111A2 represents a portion of the surface of the at least one strain body 110 that is convex relative to the concave portion 111A1.

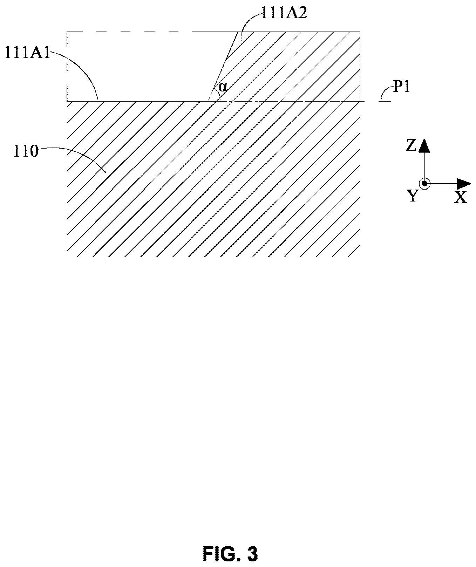

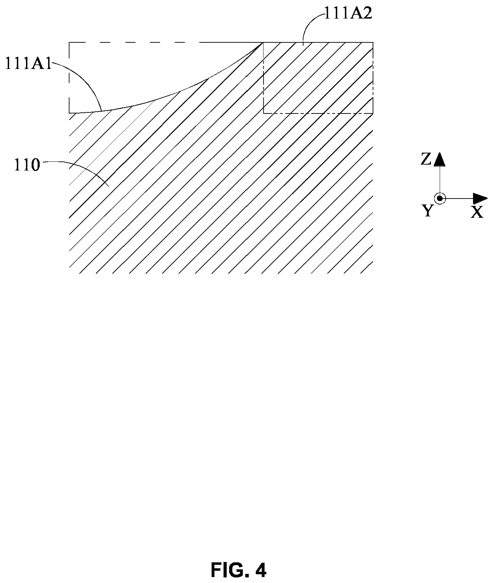

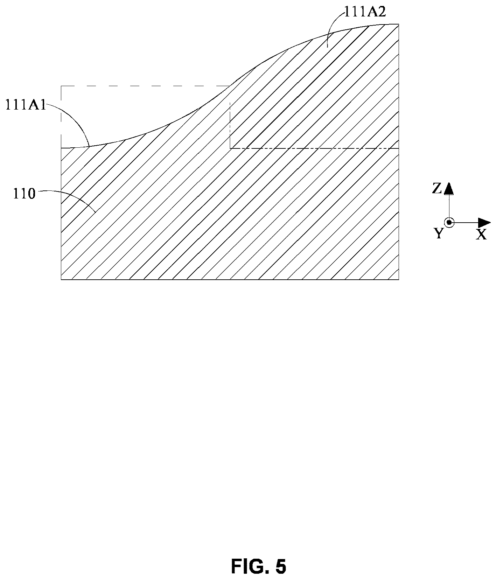

In some embodiments, as shown in FIGs. 2-5, it can be seen that a height of any point on a bottom or side surface of the concave portion 111A1 may be lower than a height of any point on a top surface of the convex portion 111A2, and in the absence of a boundary, the concave portion 111A1 may extend in a direction away from the convex portion 111A2, while the convex portion 111A2 may extend in a direction away from the concave portion 111A1. Optionally, as shown in FIG. 3, the side and bottom surfaces of the concave portion 111A1 may be flat surfaces, and the side surface of the concave portion 111A1 may be set at an angle with the datum plane P1, where an angle α between the side surface of the concave portion 111A1 and the datum plane P1 may be greater than 0° and less than 180°. In particular, when the angle is 90°, the concave portion 111A1 and the convex portion 111A2 may form a concave-convex structure as shown in FIG. 2. Optionally, the surface of the concave portion 111A1 may also be a curved surface, as shown in FIG. 4. Optionally, the surface of the concave portion 111A1 may be smoothly connected with the surface of the convex portion 111A2. In this case, at least one of the surface of the concave portion 111A1 and the surface of the convex portion 111A2 may be a curved surface, respectively, as shown in FIG. 5. The surface of the concave portion 111A1 and the surface of the convex portion 111A2 may be the curved surface, respectively, and may be smoothly connected. Optionally, the concave-convex structure may also be a notch (not shown in the figure) formed on an edge of the at least one strain body 110.

By forming the concave portion 111A1 on the surface of the at least one strain body 110, a more concentrated stress distribution may be formed in a portion of the at least one strain body 110 corresponding to the concave portion 111A1 when an external force is applied, which causes the strain on a portion of the convex portion close to the concave portion 111A1 to be less than the strain on a portion of the convex portion 111A2 away from the concave portion 111A1. In this case, a portion of the at least one strain gauge 112 located at the convex portion 111A2 may obtain a certain degree of available strain from the at least one strain body 110 so as to output a voltage signal through a bridging circuit, and cause the output voltage to change in direct proportion to the force applied to the strain-generating structure 100 with the strain.

In some embodiments, a plurality of strain gauges may be provided on the convex portion of the at least one concave-convex structure. At least two of the strain gauges may be arranged at intervals. By providing the at least two of the strain gauges at intervals, detection of forces and torques in different directions is facilitated. Optionally, in the example shown in FIG. 1, at least one concave-convex structure 111A may be provided on a surface of a portion of the at least one strain body 110 located at the lower right. The convex portion 111A2 of the at least one concave-convex structure 111A may be provided with two strain gauges 112 at intervals in a radial direction perpendicular to the strain-generating structure 100. In this way, a transverse space of the at least one strain body 110 can be fully utilized, thereby reducing the volume of the strain-generating structure 100.

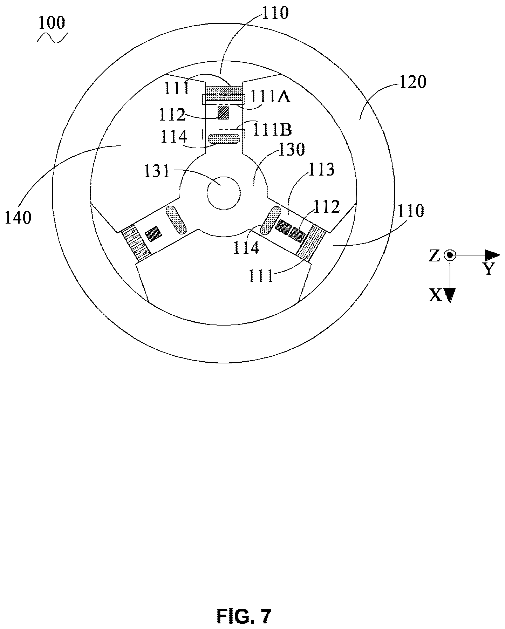

As shown in FIG. 7, at least one concave-convex structure 111A may be provided on the surface of a portion of the at least one strain body 110 located at the lower right. The convex portion 111A2 of the at least one concave-convex structure 111A may be provided with two strain gauges 112 at intervals in the radial direction of the strain-generating structure 100.

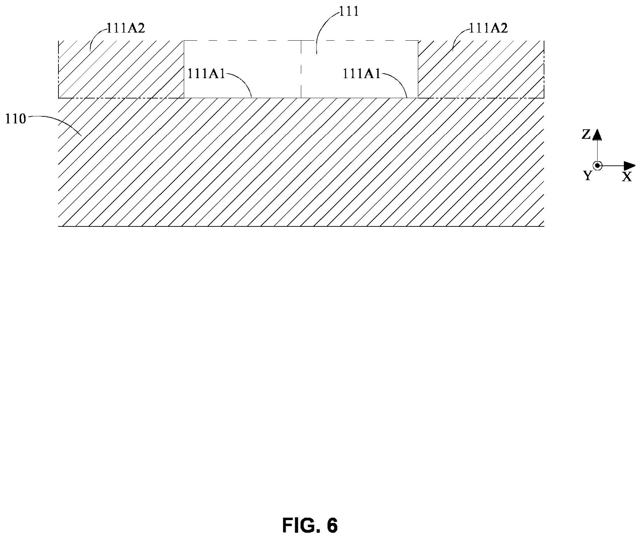

In some embodiments, as shown in FIG. 1 and FIG. 6, when a plurality of concave-convex structures 111A are provided on the surface of the at least one strain body 110, the concave portions 111A of at least one pair of adjacent concave-convex structures 111A may be connected or integrated to form at least one combined concave portion of which two sides are provided with convex portions, and the at least one strain gauge may be provided on the convex portions on one or two sides of the at least one combined concave portion. Referring to FIG. 6, it can be seen that the two sides of the at least one combined concave portion may use the convex portions 111A2 of two concave-convex structures 111A as boundaries, so as to limit a length of the at least one combined concave portion. Optionally, as shown in FIG. 7, the at least one combined concave portion may be a first groove 111 that traverses the surface of the at least one strain body 110 or a second groove 114 that forms an opening in the surface of the at least one strain body 110. Optionally, referring to FIG. 7, it can be seen that two side walls of the second groove 114 may be provided a first arc structure, respectively. In this way, the stress concentration can be avoided, more stress can be transmitted to the at least one strain body 110, and the overload resistance of the strain-generating structure 100 can also be improved.

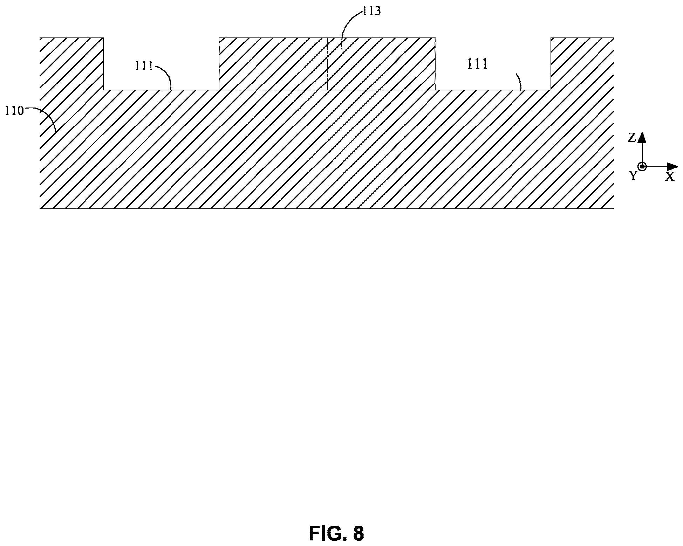

In some embodiments, as shown in FIG. 7 and FIG. 8, when a plurality of combined concave portions are provided on a surface of the at least one strain body 110, convex portions of at least one pair of adjacent combined concave portions of the plurality of combined concave portions may be connected or integrated to form the combined convex portion 113, and at least two strain gauges 112 may be provided at intervals on the combined convex portion 113. In this way, the detection of forces and toques of different directions is facilitated, and the at least one strain gauge 112 obtains more available strain, thereby improving the detection accuracy of the six-dimensional force sensor. Furthermore, at least two strain gauges 112 may be provided at intervals in sequence on the combined convex portion 113 along an arrangement direction of the pair of combined concave portions. In this way, the strain distribution brought about by the combined concave portions can be fully utilized to achieve effective detection of forces and torques. Meanwhile, the arrangement mode makes the at least one strain body 110 narrower, which makes the at least one strain body 110 more prone to generate strain, thereby facilitating the measurement of smaller forces and/or torques. For example, referring to FIG. 8, it can be seen that the two sides of the combined convex portion 113 may use the combined concave portion 111 as a boundary, respectively, so as to limit the length of the combined convex portion 113. In some embodiments, "integrated to form" as described in the present invention may be expressed as integrally molded.

In some embodiments, the at least one strain gauge 112 may include one or more Wheatstone bridges. When a plurality of Wheatstone bridges are provided, a distribution mode of the plurality of Wheatstone bridges may be in a form of being arbitrarily placed or each at an irregular angle, such as vertical distribution or left-right distribution. The Wheatstone bridges may include one of a Wheatstone full-bridge circuit, a Wheatstone half-bridge circuit, or a Wheatstone 1/4-bridge circuit. When the Wheatstone bridges include the Wheatstone full-bridge circuit, a larger output voltage may be obtained. In some embodiments, when the Wheatstone bridges include the Wheatstone half-bridge circuit, a Wheatstone full-bridge circuit may be constructed in conjunction with circuits and resistors of a six-dimensional force sensor circuit board, or the Wheatstone half-bridge circuit may be directly used without constructing the Wheatstone full-bridge circuit. When the Wheatstone bridges include the Wheatstone 1/4 bridge circuit, a Wheatstone full-bridge circuit or a Wheatstone half-bridge circuit may be constructed in conjunction with the circuits and the resistors of the six-dimensional force sensor circuit board, or the Wheatstone 1/4 bridge circuit may be directly used without constructing the Wheatstone full-bridge circuit or the Wheatstone half-bridge circuit.

Each of the Wheatstone bridges may consist of a plurality of resistance strain gauges. The resistance strain gauges may include at least one of a monolithic resistance strain gauge, a half-bridge resistance strain gauge, and a full-bridge resistance strain gauge in terms of the composition structure. An integration degree of the full-bridge resistance strain gauge may be greater than an integration degree of the half-bridge resistance strain gauge. The integration degree of the half-bridge resistance strain gauge may be greater than an integration degree of the monolithic resistance strain gauge. The higher the integration degree of the strain gauge, the more favorable the adaptability to the mounting requirements of small space and high accuracy of the six-dimensional force sensor. Specifically, the monolithic resistance strain gauge may include a resistor, and upper and lower bonding pads connected with two opposite ends of the resistor, respectively. The half-bridge resistance strain gauge may include two resistors connected in series through a middle bonding pad and the upper and lower bonding pads connected with two opposite ends of each of the two resistors, respectively. The full-bridge resistance strain gauge may include two half-bridge resistance strain gauges connected in series through the bridging pads.

Therefore, "the at least one strain gauge being parallel to the datum plane" may be expressed as a distribution surface of each resistor of the at least one strain gauge is parallel to the datum plane. Since each resistor of the at least one strain gauge is disposed at the convex portion of the at least one concave-convex structure, it is ensured that a formation surface of the concave portion and an arrangement surface of the at least one strain gauge are the same surface, thereby balancing the detection performance of the six-dimensional force sensor and the requirement for a full-plane setting of the strain gauges. When full-bridge is constructed using resistance strain gauges of a higher integration degree (e.g. the half-bridge resistance strain gauge or the full-bridge resistance strain gauge), the consistency of the resistance value can be guaranteed, and the influence of temperature on the measurement can be eliminated. The thickness of brushing is consistent across different target positions based on the subsequent printing of the same surface based on the brushing process, which further reduces the error of the full-bridge circuit, thereby greatly improving the detection accuracy of the six-dimensional force sensor.

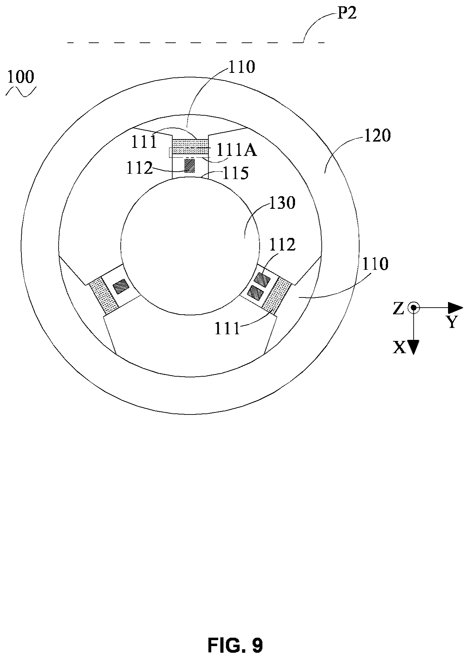

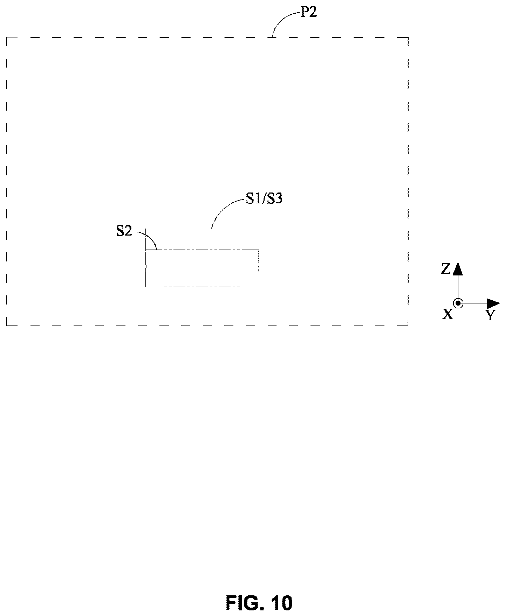

In some embodiments, according to some embodiments of the present invention, as shown in FIG. 9 and FIG. 10, the strain-generating structure 100 may have a reference plane P2 parallel to an external force input end surface of the at least one strain body 110. The external force input end surface 115 of the at least one strain body having the at least one concave-convex structure 111A may have a first orthographic projection S1 on the reference plane P2, and a cross section of a portion of the at least one strain body 110 corresponding to the concave portion 111A1 of the at least one concave-convex structure 111A may have a second orthographic projection S2 on the reference plane P2. The first orthographic projection S1 may cover the second orthographic projection S2.

In this way, after an external force is applied to the at least one strain body 110, the stress distribution on the surface of the at least one strain gauge is influenced by the concave portion 111A1 to form a stress distribution (e.g., a strain distribution) with a small stress (e.g., small strain) close to the concave portion 111A1 and a large stress (e.g., large strain) away from the concave portion 111A1. If the first orthographic projection S1 does not cover the second orthographic projection S2, it is easy to affect the stress distribution on the surface of the at least one strain gauge, which in turn will affect the detection accuracy of the six-dimensional force sensor.

Further, as shown in FIG. 9 and FIG. 10, a cross section of a portion of the at least one strain body 110 corresponding to the convex portion 111A2 of the at least one concave-convex structure 111A may have a third orthographic projection on the reference plane P2. The first orthogonal projection S1 may cover the third orthographic projection S3. Since the second orthographic projection S2 of the cross-section of the portion of the at least one strain body 110 corresponding to the concave portion 111A1 on the reference plane P2 is obviously less than the third orthographic projection S3 of the portion of the at least one strain body 110 corresponding to the convex portion 111A2 on the reference plane P2, the strain distribution brought about by the concave portion 111A1 when the external force is applied can be further ensured by causing the third orthographic projection S3 to be covered by the first orthographic projection S1.

In some embodiments, referring to FIG. 1, a concave depth of the concave portion 111A1 of the at least one concave-convex structure 111A may be less than or equal to the first preset value. In principle, as the concave depth of the concave portion 111A1 increases, a small strain region on the surface of the at least one strain body 110 may gradually increase, which ultimately leads to insufficient strain available on the convex portion 111A2. Accordingly, the concave depth of the concave portion 111A1 may have an upper limit (i.e., the first preset value) so as to avoid that the small strain region formed on the surface of the at least one strain body 110 is too large. The concave depth represents a height difference between a lowest point of the concave portion and a lowest point of the convex portion of the at least one concave-convex structure. In some embodiments, a concave depth D of the concave portion 111A1 may be determined based on a height (i.e., a thickness of he at least one strain body 110 along a z-direction) of the at least one strain body 110. Optionally, as shown in FIG. 1, when the at least one combined concave portion 111 is formed on the at least one strain body 110, a width of the at least one combined concave portion 111 may be determined based on the width of the at least one strain body 110. The width denotes a length perpendicular to a radial direction of the strain-generating structure 100.

In some embodiments, referring to FIG. 1, in the at least one strain gauge 112, a distance between a resistor of the concave portion 111A1 closest to the corresponding concave-convex structure 111A and the concave portion 111A1 may be less than or equal to a second preset value. In this way, the resistor of the at least one strain gauge 112 may not be too far away from the concave portion 111A1, which ensures that the resistor of the concave portion 111A1 closest to the corresponding concave-convex structure 111A may be located the small strain region formed on the surface of the at least one strain body 110, thereby ensuring that the at least one strain gauge 112 obtains a certain degree of available strain to realize effective detection of forces and torques.

In some embodiments, referring to FIG. 1, in the at least one strain gauge 112, a distance from a resistor of the concave portion 111A1 farthest away from the concave portion 111A1 of the corresponding concave-convex structure 111A may be greater than or equal to a third preset value. Under the influence of the concave portion 111A1, the strain on the surface of the at least one strain body 110 may decrease in a direction close to the concave portion 111A1 and increase in a direction away from the concave portion 111A1, such that the resistor of the concave portion 111A1 farthest away from the corresponding concave-convex structure 111A may be located in the large strain region formed on the surface of the at least one strain body 110, thereby ensuring that the at least one strain gauge 112 obtains a certain degree of available strain and realizing effective detection of forces and torques.

In some embodiments, referring to FIG. 7, the at least one strain body 110 may have at least one concave-convex structure 111A and at least one concave-convex structure 111B. The at least one strain gauge 112 may be disposed on a combined convex portion 113 formed by connecting or integrating convex portions of the at least one concave-convex structure 111A and the at least one concave-convex structure 111B. A distance from at least one resistor of the at least one strain gauge 112 to a center of the combined convex portion 113 may be less than or equal to a fourth preset value. Since the at least one strain gauge 112 is provided on the combined convex portion 113 (e.g., located between two concave portions), the strain in a center region of the combined convex portion 113 is maximum at the time when the external force is transmitted to the at least one strain body 110, which ensures that the at least one resistor of the at least one strain gauge 112 may be located in the center region of the combined convex portion 113 where the strain is maximum, thereby ensuring that the at least one strain gauge 112 obtains a certain degree of available strain and realizing effective detection of forces and torques.

In some embodiments, the at least one strain body 110 may be provided with a first surface and a second surface which are disposed opposite to each other and parallel to the datum plane P1. The at least one concave-convex structure may be disposed on at least one of the first surface or the second surface. The at least one the strain gauge 112 may be disposed on the convex portion 111A2 of the at least one concave-convex structure 111A of each of the at least one strain body 110. In this way, the strain distribution brought about by the concave portion 111A1 can be fully utilized, which increases a count of the strain gauges 112, further improves the detection accuracy of the six-dimensional force sensor, and meets the demand for full-plane setting of the strain gauges 112, thereby improving the production efficiency and the product yield rate.

In some embodiments, referring to FIG. 1 and FIG. 7, the strain-generating structure may further include a first rigid body 120 connected with one end of the at least one strain body 110; a second rigid body 130 connected with the other end of the at least one strain body 110 (i.e., an end that is remote from the first rigid body 120); and at least one through groove 140 disposed between the first rigid body 120 and the second rigid body 130, the at least one through groove 140 and the at least one strain body 110 being alternately disposed along a circumferential direction of the strain-generating structure 100. Wherein, the at least one strain body 110 generate strain when a force and/or a torque between the first rigid body 120 and the second rigid body 130 is transmitted to the at least one strain body 110.

In some embodiments, the first rigid body 120 may be connected with an external fixing member, and the second rigid body 130 may be connected with an external loading member, and it is ensured that there is no coupling between the first rigid body 120 and the second rigid body 130 when there is no loading force. In this way, by loading a force to the first rigid body 120 and the second rigid body 130, a tendency of relative movement may be produced between the first rigid body 120 and the second rigid body 130, such that the force and/or the torque between the first rigid body 120 and the second rigid body 130 may be transmitted to the at least one strain body 110 to cause the at least one strain body 110 to generate the strain.

In some embodiments, the first rigid body 120, the at least one strain body 110, and the second rigid body 130 may be integrally molded. Optionally, an elastomeric material may be used as a substrate material for the preparation of the strain-generating structure 100. For example, the elastomeric material may be one of stainless steel, aerospace aluminum, or a titanium alloy. In this way, the elastic material can ensure the sensitivity of strain sensing, and the integrally molded structure ensures the overloading resistance of the strain-generating structure 100. In addition, when the stainless steel is used for the preparation, the preparation cost of the strain-generating structure 100 is lower as compared to that of the aerospace aluminum and the titanium alloy, which is conducive to the industrialization of the preparation of the six-dimensional force sensor. It should be understood that the first rigid body 120, the at least one strain body 110, and the second rigid body 130 may also be separate parts which form the strain-generating structure 100 through connection.

In some embodiments, the at least one through groove 140 may have a first groove wall on the first rigid body 120 and the at least one through groove 140 may have a second groove wall on the second rigid body 130. A contour of at least a portion of the second groove wall may match a contour of at least a portion of the first groove wall. In this way, no destructive interference occurs between the first groove wall and the second groove wall under an overloading condition, thereby improving the overloading resistance of the strain-generating structure 100 and extending the service life of the six-dimensional force sensor.

In some embodiments, the at least one strain body 110 may include an elastic structure and a strain beam connected with the elastic structure. One end of the elastic structure may be connected with the first rigid body, the other end of the elastic structure (i.e., an end that is away from the first rigid body) may be connected with the strain beam. A end of the strain beam that is away from the elastic structure may be connected with the second rigid body. The convex portion of the at least one concave-convex structure of the at least one strain body may be located in the strain beam.

The elastic structure may be a thin plate structure and thus may function as a floating beam, i.e., to produce bending deformation to reduce an inter-dimensional interference of the six-dimensional force sensor when the strain-generating structure 100 is subjected to an external force. Accordingly, the elastic structure helps to improve the measurement accuracy and stability of the six-dimensional force sensor. Optionally, the at least one strain body may further include a first connection portion where the strain beam is connected with the elastic structure, and a second connection portion where the strain beam is connected with the second rigid body, such that the at least one concave-convex structures on the at least one strain body 110 may be provided on at least one of the first connection portion, the strain beam, and the second connection portion, and the convex portion of the at least one concave-convex structure is located on the strain beam. In this way, the stress distribution (e.g., the strain distribution) brought about by the concave portion of the at least one concave-convex structure when the external force is applied can be formed on the strain beam and thus be sensed by the at least one strain gauge.

In some embodiments, the elastic structure may be provided with a notch groove throughout the elastic structure. A portion of the elastic structure of the notch groove away from a side of the first rigid body may extend inwardly along a radial direction of the strain-generating structure and may be connected with the strain beam. By providing the notch groove, an outward transmission path of the stress can be blocked, such that the stress is more concentrated on the strain beam, thereby increasing the available strain of the at least one strain gauge 112 and improving the detection performance of the six-dimensional force sensor.

In some embodiments, a smooth and continuous second arc structure may be disposed at a connection between the first rigid body 120 and the elastic structure; and/or a smooth and continuous third arc structure may be disposed at a connection between the elastic structure and the strain beam; and/or a smooth and continuous fourth arc structure may be disposed at a connection between the strain beam and the second rigid body 130. By providing the above arc structure, the stress can be prevented from being concentrated at the connection of the various components, such that more stress is transmitted to the strain beam and the available strain is increased, and the overloading resistance of the strain-generating structure 100 is also improved.

In some embodiments, the first rigid body 120 and the second rigid body 130 may be disposed at different height positions along an axis of the strain-generating structure 100. In this way, a cavity for accommodating the circuit board may be formed.

In some embodiments, as shown in FIG. 7, a center region of the second rigid body 130 may be provided with a through hole 131. In this way, the internal wiring of a robotic arm and a robot is facilitated, and the hidden wiring of the robotic arm and the robot is realized. If no internal wiring is required, a solution of no through hole may be adopted by filling in the through hole.

In some embodiments, the first rigid body 120 may have a first assembly portion connected with a first object, and the second rigid body 130 may have a second assembly portion connected with a second object. A force and/or a torque between the first object and the second object may be transmitted to the strain-generating structure 100 through the first assembly portion and the second assembly portion. With the above setting, the strain-generating structure 100 may be coupled to an external object to receive an external force. Optionally, the assembly portion may be a threaded hole, a groove, or the like. Optionally, the first object may be an upper protective housing of the six-dimensional force sensor or a flange bolt of the robotic arm/robot, and the second object may be a lower protective housing of the six-dimensional force sensor or a flange bolt of the robotic arm/robot.

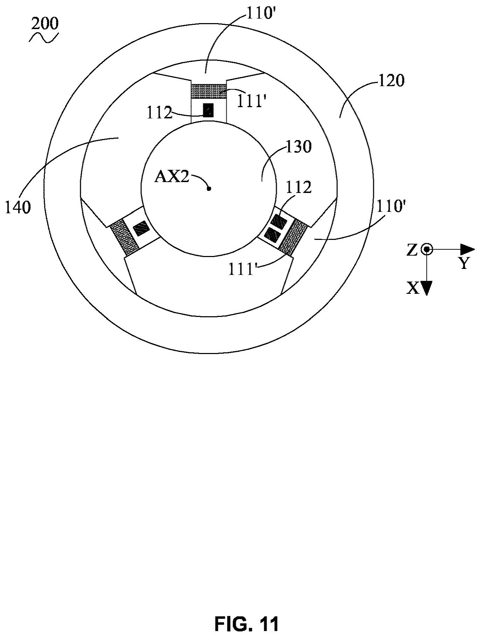

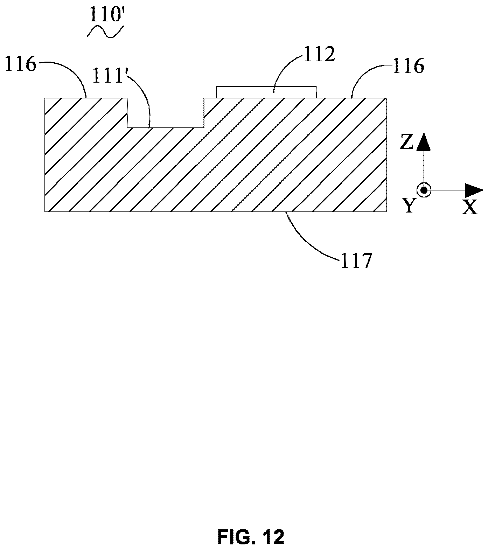

Based on the foregoing inventive concept, some embodiments of the present invention further provide another improved strain-generating structure 200. As shown in FIG. 11 and FIG. 12, the strain-generating structure may include at least one strain body 110'. The at least one strain body 110' may be configured to generate strain under an external force. The at least one strain body 110' may have at least one target surface 116 perpendicular to an axis AX2 of the strain-generating structure 200. At least one concave portion 111' may be provided on the at least one target surface 116, at least one strain gauge 112 may be provided on a non-concave portion. The at least one strain gauge 112 may be configured to sense the strain generated by the at least one strain body 110'. No strain gauge 112 may be provided on a non-target surface of each of the at least one strain body 110'.

According to the strain-generating structure 200 provided in some embodiments of the present invention, the at least one strain gauge 112 may be provided on the non-concave portion of the at least target surface of the at least one strain body 110' perpendicular to the axis AX2 of the strain-generating structure 200, while no strain gauge 112 may be provided on the non-target surface. In this way, the subsequent mounting process may be completed using a machine, which substantially reduces the production difficulty and increases the production efficiency and the product yield rate of the six-dimensional force sensor. By providing at least one concave portion on the at least one target surface on which the at least one strain gauge 112 is provided, the at least one strain body 110' may have different stress distributions at the position of the concave portion 111' and the position of the non-concave portion when the external force is applied, such that the strain of a portion of the at least one strain body 110' close to the concave portion 111' is small, and the strain of a portion of the at least one strain body 110' away from the concave portion 111' is large. Meanwhile, a portion of the at least one strain gauge 112 located on the target surface other than the concave portion 111' may obtain a certain degree of available strain and thus output an electrical signal with a certain intensity, which ensures the detection performance of the six-dimensional force sensor while each of the at least one strain gauge 112 is provided on the target surface.

In some embodiments, a plurality of concave portions 111' may be provided on the at least one target surface, and at least two strain gauges 112 may be provided at intervals on a portion of the at least one target surface between at least one pair of adjacent concave portions 111'. In this way, forces and torques of different directions can be detected, and the at least one strain gauges 112 can obtain more available strain, thereby enhancing the detection accuracy of the six-dimensional force sensor.

In some embodiments, a side of the at least one concave portion 111' and a surface of the non-concave portion may be arranged at an angle; or, a surface of the at least one concave portion 111' may be a curved surface; or, the surface of the at least one concave portion 111' and the surface of the non-concave portion may be smoothly connected.

In some embodiments, referring to FIG. 11, the at least one strain body 110' may have a first target surface 116 and a second target surface 117 which are opposite to each other and perpendicular to the axis AX2 of the strain-generating structure 200. At least one concave portion 111' may be provided on the first target surface 116, and the at least one strain gauge 112 may be provided on the non-concave portion; and/or at least one concave portion 111' may be provided on the second target surface 117, and the at least one strain gauge 112 may be provided on the non-concave portion. In this way, the strain distribution brought about by the concave portion 111A1 can be fully utilized, and the count of the strain gauges 112 can be increased, which further improves the detection accuracy of the six-dimensional force sensor, and meets the demand for full-plane setting of the strain gauges 112, thereby improving the production efficiency and the product yield rate.

In some embodiments, the strain-generating structure 200 may have a reference plane (not shown in the figure, similar to the reference plane P2) parallel to an external force input end surface of the at least one strain body 110', the external force input end surface of the at least one strain body 110' having at least one concave portion 111' may have a fourth orthographic projection on the reference plane, and a cross section of a portion the at least one strain body 110' corresponding to the at least one concave portion 111' may have a fifth orthographic projection on the reference plane. The fourth orthographic projection may cover the fifth orthographic projection. In this way, the stress distribution on the surface of the at least one strain gauge after the external force is applied to the at least one strain body 110 is influenced by the concave portion 111' to form a stress distribution (e.g., a strain distribution) in which the stress close to the concave portion 111' is small (e.g., the strain is small) and the stress (e.g., the strain is large) away from the concave portion 111' is large. If the fourth orthographic projection does not cover the fifth orthographic projection, it is easy to affect the stress distribution on the surface of the at least one strain gauge, which in turn affects the detection accuracy of the six-dimensional force sensor.

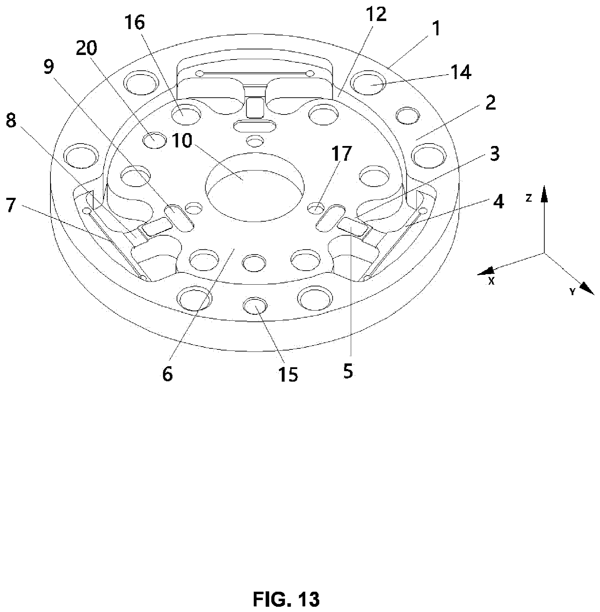

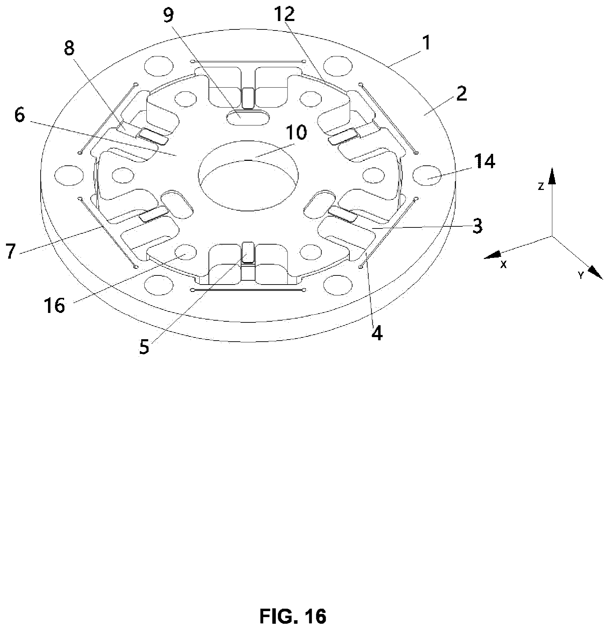

Based on the foregoing inventive concept, some embodiments of the present invention further provide another improved strain-generating structure 1. As shown in FIG. 13, the strain-generating structure 1 may include a first rigid body 2, a second rigid body 6, and at least one strain body connected between the first rigid body 2 and the second rigid body 6. The at least one strain body may be configured to generate strain under an external force. The at least one strain body, and a portion of the first rigid body 2 and a portion of the second rigid body 6 connected with the at least one strain body may form pathways R (shown in dashed ellipses) for transmitting a force and/or a torque between the first rigid body 2 and the second rigid body 6. At least one concave portion may be provided on at least one of the pathways R (a strain groove may be provided in each of the pathways R as shown in FIG. 16), and at least one strain gauge 5 may be provided on a non-concave portion. The at least one strain gauge 5 may be disposed on the at least one strain body and configured to sense the strain generated by the at least one strain body. The strain-generating structure 1 may have a datum plane perpendicular to an axis of the strain-generating structure 1. Each of the strain-generating structure 1 strain gauge 5 of the strain-generating structure 1 may be parallel to the datum plane.

According the strain-generating structure 1 provided in some embodiments of the present invention, all the strain gauges 5 are parallel to the datum plane, such that the subsequent mounting process can be completed using a machine, which substantially reduces the production difficulty and increases the productivity and the product yield rage of the six-dimensional force sensor. By providing the at least one concave portion on the pathways R for transmitting the force and/or the torque between the first rigid body 2 and the second rigid body 6 and providing the at least one strain gauge on the non-concave portion, the strain generated by a portion of the at least one strain body close to the concave portion is small, and the strain generated by a portion of the at least one strain body away from the concave portion is large, and a portion of the at least one strain gauge located outside the concave portion can obtain a certain degree of available strain and thus output an electrical signal of a certain intensity, which ensures the detection performance of the six-dimensional force sensor while the strain gauges are parallel to the datum plane.

In some embodiments, referring to FIG. 13, one of the at least one concave portion (i.e., a second strain groove 9) on the pathways R may be disposed on the second rigid body 6, which realizes the miniaturization of the strain-generating structure 1, thereby broadening the scope of application of the strain-generating structure 1. For example, a width of the second strain groove 9 (i.e., a length perpendicular to a radial direction of the strain-generating structure 1) may be greater than a width of the strain beam 3.

In some embodiments, referring to FIG. 13, at least two concave portions (e.g., a first strain groove 8 and the second strain groove 9) may be provided at intervals on at least one pathway R in an extension direction of the pathway R, and at least two strain gauges 5 may be disposed between at least one pair of adjacent concave portions in an extension direction of the at least one pathway R. In this way, the detection of forces and torques of different directions is facilitated, and the at least one strain gauge 112 obtains more available strain, which improves the detection accuracy of the six-dimensional force sensor.

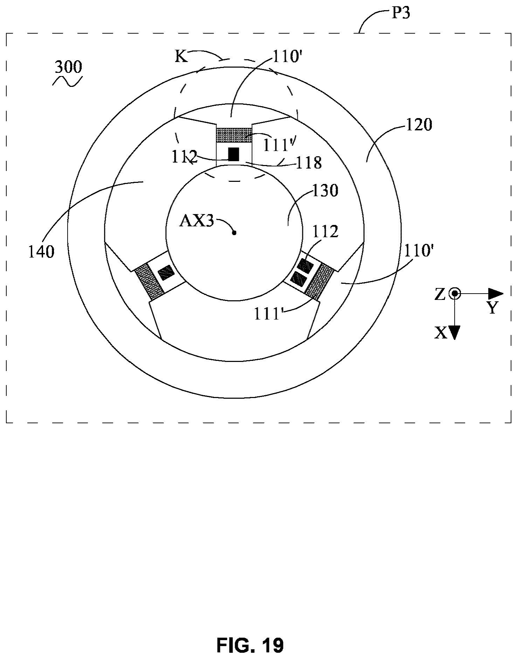

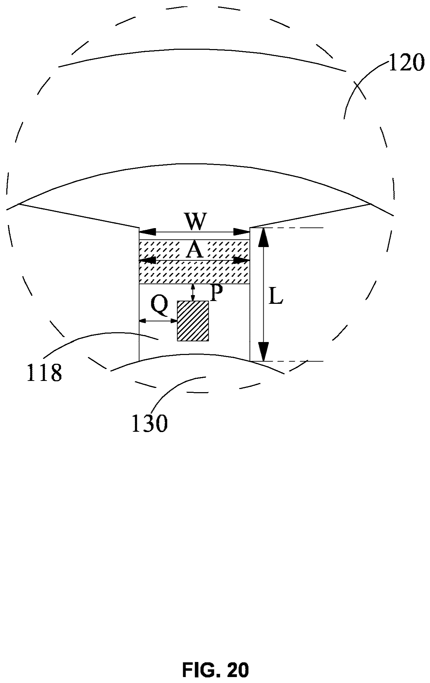

Based on the foregoing inventive concepts, some embodiments of the present invention further provide another improved strain-generating structure 300. As shown in FIG. 19 and FIG. 20, the strain-generating structure 300 may include at least one strain body 110' including a strain beam 118. The strain beam 118 may be configured to generate strain under an external force. At least one concave portion 111' may be disposed on a surface of the at least one strain body 110', and at least one strain gauge 112 may be provided on a non-concave portion. Each of the at least one strain gauge 112 may be provided on the strain beam 118 and configured to sense the strain generated by the strain beam 118. The at least one concave portion 111' satisfies the following relation: 0.001H ≤ D ≤ 0.8H, A ≥ W, where D denotes a depth of the at least one concave portion 111', A denotes a width of the at least one concave portion 111', H denotes a height of the strain beam 118, and W denotes a width of the strain beam 118. The strain-generating structure may have a datum plane P3 perpendicular to an axis AX3 of the at least one. Each of the at least one strain gauge 112 of the strain-generating structure 300 may be parallel to the datum plane P3.

According to the strain-generating structure 300 provided in the embodiments of the present invention, all the strain gauges 112 are parallel to the reference plane P3, such that the subsequent mounting process can be completed using a machine, which substantially reduces the production difficulty and improves the production efficiency and the product yield rate of the six-dimensional force sensor. By providing the at least one concave portion 111' on the surface of the at least one strain body 110' provided with the at least one strain gauge 112, and making the at least one concave portion 111' satisfy the above equation, the at least one strain body 110 has different stress distributions at the position of the at least one concave portion 111' and the position of the non-concave portion when an external force is applied, such that the strain generated by a portion of the strain beam 118 close to the at least one concave portion 111' is relatively small, and the strain generated by a portion of the strain beam 118 away from the concave portion 111' is relatively large. In this case, a portion of the at least one strain gauge 112 located at the non-concave portion can obtain a certain degree of available strain and thus output an electrical signals of a certain intensity, which ensures the detection performance of the six-dimensional force sensors while each of the at least one strain gauge 112 is parallel to the reference plane P3.

For example, a depth D of the at least one concave portion 111' may be one of 0.001 H, 0.01 H, 0.1 H, 0.2 H, 0.4 H, 0.6 H, and 0.8 H. A magnitude of the depth D may affects a small strain region on the strain beam 118.

In some embodiments, referring to FIG. 20, the strain gauge 112 may also satisfy the following relation: 0 < P ≤ 0.4L, where P denotes a distance between the at least one strain gauge 112 and an edge of the at least one concave portion 111', and L denotes a length of the strain beam 118; and/or the at least one strain gauge 112 may satisfy the following relation: 0 < Q ≤ 0.4W, where Q denotes a distance between the at least one strain gauge 112 and a side edge of the strain beam 118. For example, P may be one of 0.05 L, 0.1 L, 0.2 L, 0.3 L, 0.4 L. For example, Q may be one of 0.05 W, 0.1 W, 0.2 W, 0.3 W, and 0.4 W. In principle, the smaller the values of P and Q, the better. If the values of P and Q are excessively large, the signal output intensity of the bridge arm of the Wheatstone bridge may be reduced.

The inventive concept and effect of the present invention are further described below with reference to two embodiments.

### Embodiment 1

As shown in FIG. 13, the strain-generating structure 1 may be machined from a whole piece of cylindrical metal substrate. The strain-generating structure 1 may include a first rigid body 2, a second rigid body 6, an elastic structure 4, and a strain beam 3. One end of the elastic structure 4 may be connected with the first rigid body 2, the other end of the elastic structure 4 away from the first rigid body 2 may be connected with the strain beam 3. An end of the strain beam 3 away from the elastic structure 4 may be connected with the second rigid body 6, such that the first rigid body 2 and the second rigid body 6 are completely connected through the elastic structure 4 and the strain beam 3. The strain-generating structure 1 may have three elastic structures 4 and three strain beams 3. The three strain beams 3 may be polyhedral beam structures. The first rigid body 2 may be connected with the three elastic structures 4, respectively, and each of the three elastic structures 4 may extend inwardly to form a "T-shaped" structure. The three strain beams 3 may be respectively connected with the "T-shaped" structure formed by the three elastic structures 4. Three strain bodies composed of the three strain beams 3 and the three elastic structures 4 can be evenly distributed along a circumferential direction of the strain-generating structure 1, or distributed at an uneven angle, respectively.

Three through grooves 12 may be provided between the first rigid body 2 and the second rigid body 6, and the three through grooves 12 may also be evenly distributed or distributed at an uneven angle, respectively. The first rigid body 2 and the second rigid body 6 may be located at different heights along an axis of the strain-generating structure 1, respectively, to enclose with the elastic structures 4 and the strain beams 3 to form a cavity for accommodating a PCB.

The first rigid body 2 may be a peripheral rigid structure of the six-dimensional force sensor and configured to transmit a force and/or a torque from a Z-axis forward connection component. In this case, a force transmission path may be from the first rigid body 2 to the elastic structures 4, and then to top ends of the strain beams 3. The second rigid body 6 may be an inner ring rigid structure of the six-dimensional force sensor and configured to transmit a force and/or torque from a Z-axis backward connection component. In this case, the force transmission path may be from the second rigid body 6 to bottom ends of the strain beams 3, such that the strain of the three strain beams 3 can characterize the force of the six-dimensional force sensor. The present embodiment 1 may have a continuous arc structure between the second rigid body 6 and the strain beams 3, between the elastic structures 4 and the strain beams 3, and between the elastic structures 4 and the first rigid body 2, respectively, which avoids the stress concentration, and improves the overloading resistance of the strain-generating structure 1. In addition, in the present embodiment 1, a through-hole 10 may be provided in a center of the second rigid body 6 and used for the internal wiring of the robotic arm to realize the hidden wiring of a robotic arm and a humanoid robot. If there is no need for the internal wiring, a solution of no through hole is adopted by filling in the through hole 10.

Referring to FIG. 13, in some embodiments, a first strain groove 8 may be provided at a connection between each of the strain beams 3 and each of the elastic structures 4, and a second strain groove 9 may be provided at a connection between each of the strain beams 3 and the second rigid body 6. The first strain groove 8 and the second strain groove 9 may be milled into a polygonal shape or a shallow groove structure with rounded polygons. In some embodiments, at least one strain gauge 5 may be mounted between the first strain groove 8 and the second strain groove 9. The at least one strain gauge 5 may convert the strain of the strain beams 3 into an electrical signal. The at least one strain gauge 5 and the strain beams 3 may be connected together using a non-metallic material cured at a high temperatures such that the strain of the strain beams 3 can be transmitted intact to the at least one strain gauge 5.

The function of the first strain groove 8 and the second strain groove 9 is to make the strain of the strain beams 3 close the position of the strain groove gradually decrease and the strain away from the position of the strain groove gradually increases when the strain-generating structure is subjected to a force. With the characteristic, by constructing a bridging circuit of the at least one strain gauge 5, an output voltage of the at least one strain gauge 5 may change in direct proportion to the stress of an elastomer. In some embodiments, the first strain groove 8 and the second strain groove 9 may have various application forms and appearance shapes, including, but not limited to, milling of bosses, milling of grooves, or the like, on upper and lower surfaces of the strain beams 3.

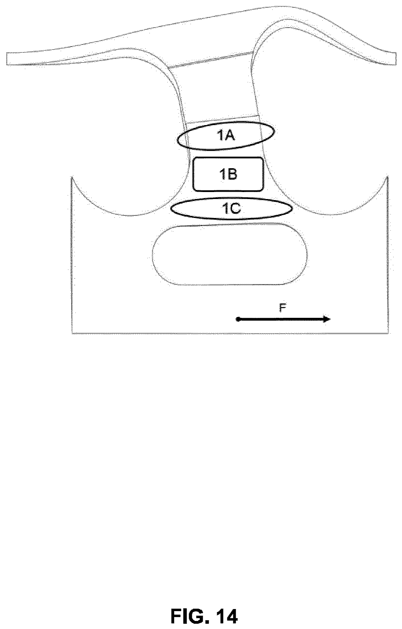

FIG. 14 is a schematic diagram illustrating deformation of a strain beam 3 when a strain-generating structure 1 is subjected to a force/torque parallel to an XY plane according to Embodiment 1 of the present invention. When the elastomer is subjected to the force/torque parallel to the XY plane, the strain beam 3 splits strain in an opposite direction along a neutral layer perpendicular to the XY plane. As shown in FIG. 14, a left region of the strain beam 3 may be in a compression state, and a right side region of the strain beam 3 may be in a tensile state. In this case, a resistance value of a left resistance strain gauge of the at least one strain gauge 5 may decrease and a resistance value of a right resistance strain gauge of the at least one strain gauge 5 may increase.
the strain beam 3 may be divided into a region 1A, a region 1B, and a region 1C. The region 1A may be close to the first strain groove 8, the region 1C may be close to the second strain groove 9, and the region 1B may be disposed between the region 1A and the region 1C. As the effect of the first strain groove 8 and the second strain groove 9, the strain of the region 1A and the region 1C is less than the strain of the region 1B. In this case, a magnitude of a change in a resistance value of a resistance strain gauge of the at least one strain gauge 5 disposed in the region 1A and the region 1C may be less than a magnitude of change in a resistance value of a resistance strain gauges disposed in the region 1B. Finally, the at least one strain gauge 5 may construct a voltage output proportional to the strain based on a difference in the resistance values of the resistance strain gauges.

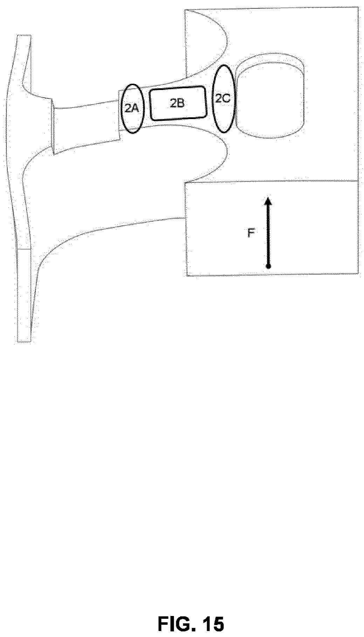

FIG. 15 is a schematic diagram illustrating deformation of a strain beam when a strain-generating structure is subjected to a force/torque perpendicular to an XY plane according to Embodiment 1 of the present invention. When the strain-generating structure 1 is subjected to the force/torque perpendicular to the XY plane , the strain beam 3 may split strain in an opposite direction along a neutral layer parallel to the XY plane. As shown in FIG. 15, an upper surface of the strain beam 3 may be in a tensile state and a lower surface of the strain beam 3 may be in a compression state. In this case, the resistance values of the left and right resistance strain gauges of the strain gauge 5 may increase synchronously.
the strain beam 3 may be divided into a region 2A, a region 2B, and a region 2C. The region 2A may be close to the first strain groove 8, the region 2C may be close to the second strain groove 9, and the region 2B may be disposed between the region 2A and the region 2C. As the effect of the first strain groove 8 and the second strain groove 9, the strain of the region 2A and the region 2C may be less than the strain of the region 2B. In this case, a magnitude of change in a resistance value of a resistance strain gauge of the at least one strain gauge 5 disposed in the region 2A and the region 2C may be less than a magnitude of change in a resistance value of a resistance strain gauge disposed in the region 2B. Finally, the at least one strain gauge 5 may construct a voltage output that is proportional to the strain based on a difference in the resistance values of the resistance strain gauges.

### Embodiment 2

As shown in FIG. 16, the overall structure of Embodiment 2 is basically the same as the overall structure of Embodiment 1, and the difference lies in that Embodiment 2 provides six elastic structures 4 and six strain beams 3, and each of the six strain beam 3 corresponds to a strain groove. Specifically, referring to FIG. 16, three of the six strain beams 3 are correspondingly provided with a first strain groove 8, respectively, and the other three of the six strain beams 3 are correspondingly provided with a second strain groove 9, respectively. A strain gauge 5 may be mounted below the first strain groove 8 or above the second strain groove 9. The strain gauge 5 may convert strain of the strain beams 3 into an electrical signal. The strain gauge 5 and the strain beams 3 may be connected using a non-metallic material cured at a high temperature, such that the strain of the strain beams 3 can be completely transmitted to the strain gauge 5. The effect of the first strain groove 8 and the second strain groove 9 is consistent with the effect of the strain-generating structure 1 of the six-dimensional force sensor with three strain beams, which is not repeated here.

Several optional embodiments that can be applied to Embodiment 1 and Embodiment 2 are provided below using Embodiment 1 as an example.

### Optional Embodiment 1

As shown in FIG. 13, the elastic structure 4 may be provided with a plurality of through holes which are connected through a notch groove 7. When the six-dimensional force sensor is subjected to a force or a torque parallel to the XY plane, the strain beam 3 may obtain strain in an opposite direction along a neutral layer perpendicular to the XY plane. When the six-dimensional force sensor is subjected to a force or a torque perpendicular to the XY plane, the strain beam 3 may obtain strain in an opposite direction along the neutral layer in parallel to the XY plane.

### Optional Embodiment 2

As shown in FIG. 13, the first rigid body 2 may be provided with a plurality of primary threaded holes 14. The first rigid body 2 may be connected with an upper protective housing of the six-dimensional force sensor through the primary threaded holes 14 or directly connected with a flange bolt of a robotic arm. The first rigid body 2 may be further provided with a plurality of primary pin holes 15 for flange disassembly and positioning and anti-reverse mounting of an upper protective housing and a robotic arm of the six-dimensional force sensor. The second rigid body 6 may be provided with a plurality of secondary threaded holes 16 for flange disassembly and positioning and anti-reverse mounting of a lower protective housing and the robotic arm of the six-dimensional force sensor. The second rigid body 6 may be provided with a plurality of PCB mounting threaded hoes 17 for securing a PCB to the second rigid body 6 using bolts. Mechanical connection processes of the first rigid body 2 and the second rigid body 6 may include, but are not limited to, the use of bolts, snap-fitting, welding, or the like.

### Optional Embodiment 3

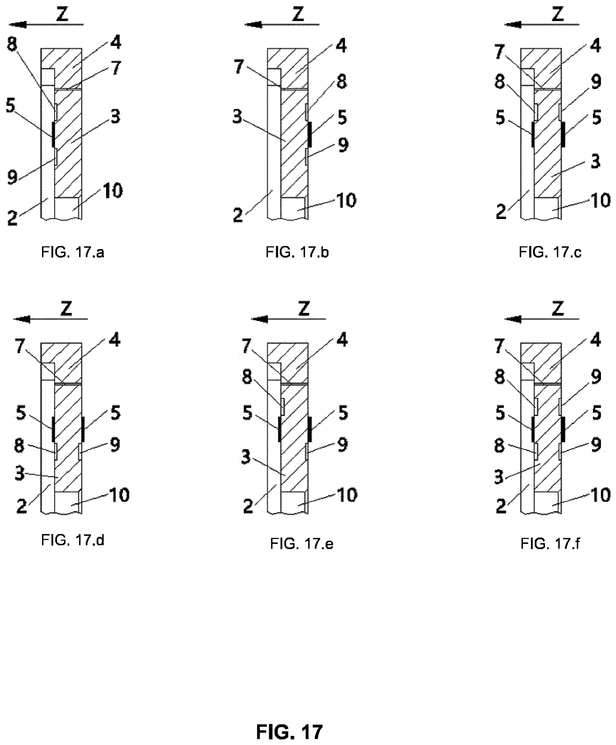

FIG. 17 shows various variations of at least one strain beam 3 and various optional arrangements of the at least one strain gauge 5 provided on the at least one strain beam 3.

As shown in FIG. 17.a, the first strain groove 8 and the second strain groove 9 may be disposed on an upper surface of the at least one strain beam 3. Each of the at least one strain beam 3 may use one strain gauge 5 and the strain gauge 5 may be mounted between the first strain groove 8 and the second strain groove 9, which is a first variation of the at least one strain beam 3. As shown in FIG. 17.b, the first strain groove 8 and the second strain groove 9 may be disposed on a lower surface of the at least one strain beam 3. Each of the at least one strain beam 3 may use one strain gauge 5, and the strain gauge 5 may be mounted between the first strain groove 8 and the second strain groove 9, which is a second variation of the at least one strain beam 3. As shown in FIG. 17.c, the first strain groove 8 and the second strain groove 9 may be disposed on the upper and lower surfaces, respectively, of the at least one strain beam 3, and both the first strain groove 8 and the second strain groove 9 may be disposed at a top end of the at least one strain beam 3. Each of the at least one strain beam 3 may use two strain gauges 5, and the two strain gauges 5 may be mounted below the first strain groove 8 and the second strain groove 9, which is a third variation of the at least one strain beam 3. As shown in FIG. 17.d, the first strain groove 8 and the second strain groove 9 may be disposed on the upper and lower surfaces of the strain beams 3, respectively, and both the first strain groove 8 and the second strain groove 9 may be disposed at a bottom end of the at least one strain beam 3. Each of the at least one strain beam 3 may use two strain gauges 5, and the two strain gauges 5 may be mounted above the first strain groove 8 and the second strain groove 9, which is a fourth variation of the at least one strain beam 3. As shown in FIG. 17.e, the first strain gauge 8 and the second strain gauge 9 may be disposed on the upper and lower surfaces of the at least one strain beam 3, respectively, or the first strain gauge 8 may be disposed on the lower surface of the strain beam 3 and the second strain gauge may be disposed on the upper surface of the strain beam 3. The first strain gauge 8 may be located at the top end of the at least one strain beam 3, and the second strain gauge 9 may be located at the bottom end of the strain beam 3. Each of the at least one strain beam may use two strain gauges 5, and the two strain gauges 5 may be mounted between the first strain groove 8 and the second strain groove 9, which is a fifth variation of the at least one strain beam 3. As shown in FIG. 17.f, the first strain groove 8 and the second strain groove 9 may be disposed on the upper and lower surfaces, respectively, of the at least one strain beam 3, and the first strain groove 8 may be disposed on both the top end and the bottom end of the at least one strain beam 3. Similarly, the second strain groove 9 may be disposed at both the top end and the bottom end of the at least one strain beam 3. Each of the at least one strain beam 3 may use two strain gauges 5, and the two strain gauges 5 may be mounted between the first strain groove 8 and the second strain groove 9, which is a sixth variation of the at least one strain beam 3.

### Optional Embodiment 4

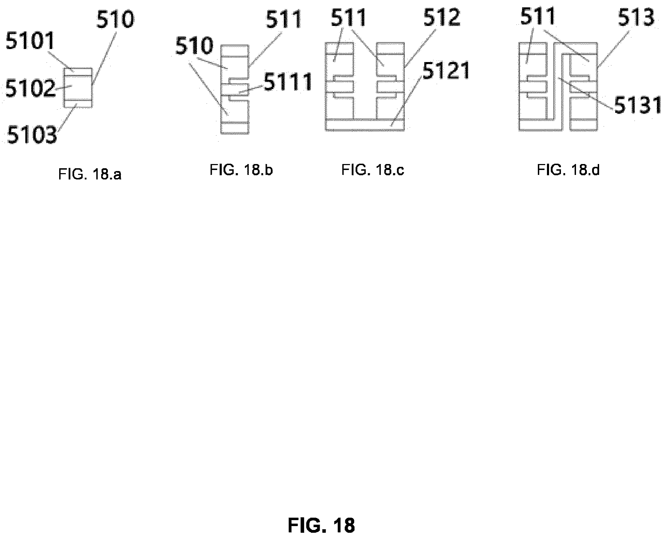

FIG. 18 shows a top view of various constituent structures of the resistance strain gauge. The resistance strain gauge is a sheet element etched using diffused silicon.

FIG. 18.a is a monolithic resistance strain gauge 510. The monolithic resistance strain gauge 510 may consist of an upper bonding pad 5101, a silicon resistor 5102, and a lower bonding pad 5103. The silicon resistor 5102 may be a stress-sensitive element, and a resistance value of the silicon resistor 5102 may change with an applied stress. The silicon resistor 5102 may be centered and connected with the upper bonding pad 5101 and the lower bonding pad 5103, respectively. The monolithic resistance strain gauge 510 may be connected to an external electrical circuit through the upper bonding pad 5101 and the lower bonding pad 5103. FIG. 18.b shows a half-bridge resistance strain gauge 511. The half-bridge resistance strain gauge 511 may consist of two monolithic resistance strain gauges 510 connected in series. A middle bonding pad 5111 may connect the two monolithic resistance strain gauges 510. The half-bridge resistance strain gauges 511 may be connected to the external electrical circuit the upper bonding pad 5101, the middle bonding pad 5111, and the lower bonding pad 5103. FIG. 18.c is a first full-bridge resistance strain gauge 512. The first full-bridge resistance strain gauge 512 may consist of two half-bridge resistance strain gauges 511 connected in series. Generally, a first bridging bonding pad 5121 may connect the lower bonding pads 5103 of the two half-bridge resistance strain gauges 511 to form a tail-to-tail connection. In this case, the first full-bridge resistance strain gauge 512 may be connected to the external electrical circuit through the two upper bonding pads 5101, the two middle pads 5111, and the first bridging bonding pad 5121. In particular, the first bridging bonding pad 5121 may also connect the upper bonding pads 5101 of the two half-bridge resistance strain gauges 511 to form a head-to-head connection. In this case, the first full-bridge resistance strain gauge 512 may be connected to the external electrical circuit through the first bridging bonding pad 5121, the two middle bonding pads 5111, and the two lower bonding pads 5103. FIG. 18.d is a second full-bridge resistance strain gauge 513. The second full-bridge resistance strain gauge 513 may consist of two half-bridge resistance strain gauges 511 connected in series. The second bridging bonding pad 5131 may connect the two half-bridge resistance strain gauges 511 to form a head-to-tail connection. In this case, the second full-bridge resistance strain gauge 513 may be connected to the external electrical circuit through one upper bonding pad 5101, two middle bonding pads 5111, one lower bonding pad 5103, and the second bridging bonding pad 5131. A first Wheatstone bridge 501 and a second Wheatstone bridge 502 may be formed using one or more of the resistance strain gauges described above.

Some embodiments of the present invention further provide a preparation method of a strain-generating structure. The preparation method may comprise: providing at least one through groove in a substrate to form a first rigid body and a second rigid body which are arranged at intervals and at least one strain body connecting the first rigid body and the second rigid body; thinning a portion of a region of the at least one strain body to form at least one concave-convex structure; and attaching all strain gauges to a convex portion of the at least one concave-convex structure in a way of being parallel to a datum plane. The strain gauges may be configured to sense strain generated by the at least one strain body. The datum plane may be perpendicular to an axis of the strain-generating structure.

According to the preparation method of the strain-generating structure provided in some embodiments of the present invention, by attaching all the strain gauges to the at least one strain body in a way of being parallel to the datum plane, the difficulty of mounting can be substantially reduced, thereby improving the production efficiency and the product yield rate of the six-dimensional force sensor. In addition, the at least one concave-convex structure is formed on the surface of the at least one strain body provided with the strain gauges by thinning a portion of the region of the at least one strain body, such that the at least one strain body has different stress distributions at a concave portion and a convex portion of the at least one concave-convex structure when an external force is applied, the strain generated by a portion of the at least one strain body close to the concave portion is small, and the strain generated by a portion of the at least one strain body away from the concave portion is large. In this case, a portion of the strain gauges located in the convex portion of the at least one concave-convex structure can obtain a certain degree of available strain and thus output an electrical signal of a certain intensity, which ensures the detection performance of the six-dimensional force sensor while the strain gauges are parallel to the datum plane.

In some embodiments, the strain gauge may be mounted using a bonding agent. Optionally, the bonding agent may be glue, glass powder, or the like. When glue is used for bonding, a uniform thickness of glue may be applied to the surface of the at least one strain body using a printing press, thereby preventing affecting the resistance value of the resistor in the bridge caused by different thicknesses of the glue.

Some embodiments of the present invention further provide a force detection module comprising any of the strain-generating structures as described above and a measurement circuit coupled with each of the strain gauges of the strain-generating structure. The measurement circuit may be configured to measure a direction and a magnitude of a force and/or torque applied to the strain-generating structures based on an electrical signal from the at least one strain gauge.

In some embodiments, the strain-generating structure may further include a first rigid body connected with one end of the at least one strain body; a second rigid body connected with one end of the at least one strain body away from the first rigid body; and at least one through groove disposed between the first rigid body and the second rigid body, the at least one through groove and the at least one strain body being alternately arranged along a circumferential direction of the strain-generating structure. The at least one strain body generate strain when the force and/or the torque between the first rigid body and the second rigid body is transmitted to the at least one strain body. The first rigid body and the second rigid body may be located at different heights along an axis of the strain-generating structure. The measurement circuit may include a circuit board provided in a cavity formed by enclosing the first rigid body, the at least one strain body, and the second rigid body. The circuit board may be provided with a wiring groove corresponding to each strain gauge, and a bridging bonding pad connected with a bonding pad of each strain gauge may be provided near the wiring groove.

In some embodiments, the measurement circuitry may include a PCB (printed circuit board (PCB)), which is placed in an internal cavity of the strain-generating structure and configured to accomplish acquisition, amplification, and conversion of a strain electrical signal to a force and torque signal, and perform direction solution.

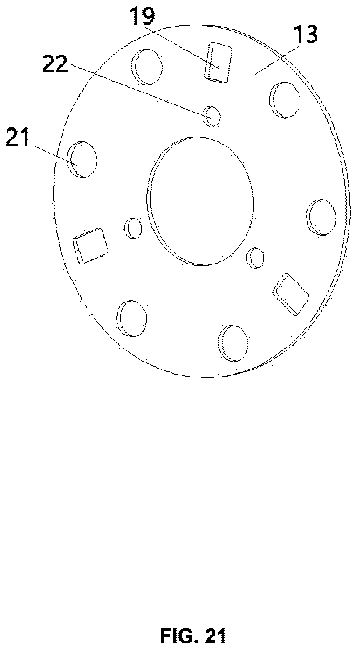

As shown in FIG. 21, a PCB 13 may be provided with a plurality of polygonal grooves 19. A region enclosed by each polygonal groove 19 may correspond to a region where the strain gauge 5 of each strain beam 3 is located. A mounting through hole 22 may be disposed at a position of the PCB 13 at connected with the second rigid body 6 for mechanically connecting the PCB 13 with the second rigid body 6. Positions of the PCB 13 corresponding to secondary threaded holes 16 may be provided with bolt through holes 21 which allow mounting bolts of a lower protective housing or a flange of a robotic arm to penetrate through the PCB 13, thereby realizing various mechanical connections of the robotic arm.

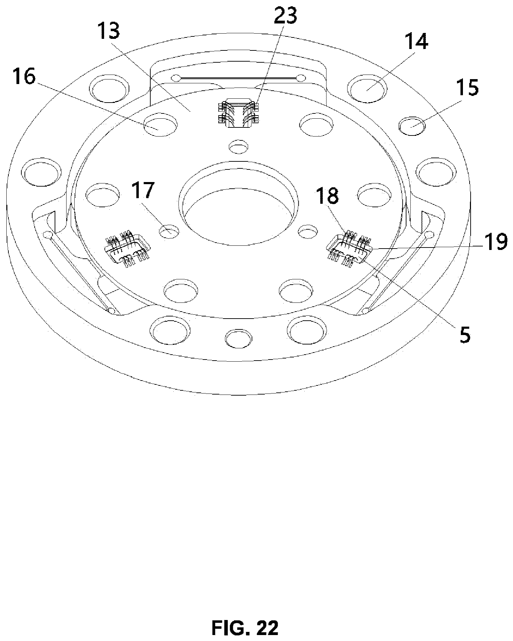

As shown in FIG. 22, the PCB 13 may connect a metal wire from a bonding pad of the at least one strain gauge 5 to a bonding pad of the PCB using a binding technique. The PCB 13 of this embodiment may be provided with a plurality of bridging pads. According to the type of resistance strain gauges used for the first Wheatstone bridge 501 and the second Wheatstone bridge 502 on the at least one strain gauge 5, a plurality of metal wires 18 may be connected from the bonding pads of the resistance strain gauges to the bridging pads 23 of the PCB 13 using the binding technique. One end of each of the metal wires 18 may be fixed to the bonding pads of the resistance strain gauges and the other end of each of the metal wires 18 may be fixed to the bridging pads 23 of the PCB 13, thereby realizing electrical connection between the at least one strain gauge 5 and the PCB 13.

Some embodiments of the present invention further provide a force sensor comprising any of the force detection modules as described above. The force sensor is conducive to reducing preparation manpower while ensuring detection accuracy, improving production efficiency and the product yield rate, and reducing the size and lowering the production cost.

Some embodiments of the present invention further provide a robot comprising a force sensor disposed at a position of at least one joint or a robotic arm, or a robotic tie rod of the robot as previously described.

For example, the robot may include at least one of an industrial collaborative robot, a quadrupedal robot, a transportation robot, a surgical robot, and a humanoid robot, such as robotic arm assembly, sanding and polishing, and handling and dragging in the field of industrial production; telesurgery in the field of medicine; wind tunnel testing and space station on-orbit assembly in the field of aerospace; and the research of control algorithms for the robotic arm, the development of teaching aids, etc., in the field of education and scientific research. When a six-dimensional force sensor is mounted at a wrist and ankle position of the humanoid robot, the six-dimensional force sensor can provide a mechanical acquisition signal to the robot to assist the force control algorithms of the humanoid robot, which belongs to the core components in the humanoid robot assembly.

As can be seen from the various embodiments described above in the present invention, the inventive concept of the present invention is helpful to develop a six-dimensional force sensor product that is highly accurate, high-resolution, miniaturized, lightweight, and low-cost, so as to obtain broad application prospects in the field of robotics.

It should be understood that such numbers used for the description of the embodiments use the modifier "about", "approximately", or "substantially" in some examples. Unless otherwise stated, "about", "approximately", or "substantially" indicates that the number is allowed to vary by ±20%. Correspondingly, in some embodiments, the numerical parameters used in the description and claims are approximate values, and the approximate values may be changed according to the required features of individual embodiments. In some embodiments, the numerical parameters should consider the prescribed effective digits and adopt the method of general digit retention. Although the numerical ranges and parameters used to confirm the breadth of the range in some embodiments of the present invention are approximate values, in specific embodiments, settings of such numerical values are as accurate as possible within a feasible range.

The technical features of the above-mentioned embodiments can be combined arbitrarily. In order to make the description concise, not all possible combinations of the technical features in the above embodiments are described. However, as long as there is no contradiction in the combination of these technical features, they should be considered to be within the scope of the present invention.

The above embodiments express only several embodiments of the present invention, which are described in a more specific and detailed manner, but are not to be construed as a limitation of the patent scope of the present invention. It should be pointed out that, for a person of ordinary skill in the art, several variations and improvements can be made without departing from the conception of the present invention, which all fall within the scope of protection of the present invention. Therefore, the scope of protection of the patent for the present invention shall be subject to the appended claims.

## Claims

1. A strain-generating structure, comprising:
at least one strain body, and the strain body is configured to generate strain under an external force; wherein
a surface of the at least one strain body is provided with at least one concave-convex structure, the concave-convex structure is provided with a concave portion and a convex portion adjacent to the concave portion, the convex portion of at least one of the concave-convex structure is provided with at least one strain gauge, and the strain gauge is configured to sense the strain generated by the strain body;
the strain-generating structure has a datum plane perpendicular to an axis of the strain-generating structure, and each strain gauge of the strain-generating structure is disposed parallel to the datum plane.

2. The strain-generating structure of claim 1, wherein a plurality of strain gauges are disposed on the convex portion of at least one of the concave-convex structure, wherein at least two strain gauges are disposed at intervals.

3. The strain-generating structure of claim 2, wherein at least two strain gauges are disposed at intervals in sequence in a direction away from or close to the concave portion of the concave-convex structure.

4. The strain-generating structure of claim 1, wherein a plurality of concave-convex structures are disposed on the surface of at least one of the strain body, wherein concave portions of at least one pair of adjacent concave-convex structures are connected or integrated to form a combined concave portion with convex portions disposed on two sides, and at least one of the strain gauge is disposed on the convex portion on one of the two sides or the convex portions on the two sides of at least one of the combined concave portion.

5. The strain-generating structure of claim 4, wherein a plurality of combined concave portions are disposed on the surface of at least one of the strain body, wherein convex portions of at least one pair of adjacent combined concave portions are connected or integrated to form a combined convex portion, and at least two strain gauges are arranged

6. The strain-generating structure of claim 5, wherein at least two strain gauges are provided at intervals in sequence on the combined convex portion along an arrangement direction of the pair of combined concave portions.

7. The strain-generating structure of any one of claims 4 to 6, wherein types of the combined concave portions include at least one of a first groove that traverses the surface of the strain body and a second groove that forms an opening on the surface of the strain body.

8. The strain-generating structure of any one of claims 4 to 6, wherein at least one side wall of the combined concave portions is provided a smooth and continuous first arc structure.

9. The strain-generating structure of claim 1, wherein at least one of the strain body is provided with a first surface and a second surface which disposed opposite to each other and parallel to the datum plane, at least one of the concave-convex structure is disposed on at least one of the first surface or the second surface, and at least one of the strain gauge is disposed on the convex portion of at least one of the concave-convex structure.

10. The strain-generating structure of claim 1, wherein a side of the concave portion of at least one of the concave-convex structure and the datum plane are arranged at an angle;
or, the surface of the concave portion of at least one of the concave-convex structure is a curved surface;
or, the surface of the concave portion and the surface of the convex portion of at least one of the concave-convex structure are smoothly connected.

11. The strain-generating structure of claim 1, wherein a concave depth of the concave portion of the at least one concave-convex structure is less than or equal to a first preset value.

12. The strain-generating structure of claim 1, wherein the strain-generating structure has a reference plane parallel to an external force input end surface of the strain body, at least one of the concave-convex structure is provided on the strain body and the external force input end surface of the strain body has a first orthographic projection on the reference plane, and a cross section of a portion of the strain body corresponding to the concave portion of at least one of the concave-convex structure has a second orthographic projection on the reference plane, the first orthographic projection covering the second orthographic projection.

13. The strain-generating structure of claim 12, wherein a cross section of a portion of the strain body corresponding to the convex portion of at least one of the concave-convex structure has a third orthogonal projection one the reference plane, the first orthogonal projection covering the third orthogonal projection.

14. The strain-generating structure of any one of claims 1 to 6, wherein the at least one strain gauge includes at least one Wheatstone bridge, the at least one Wheatstone bridge includes at least one of a monolithic resistance strain gauge, a half-bridge resistance strain gauge, a full-bridge resistance strain gauge; wherein
the monolithic resistance strain gauge includes a resistor and an upper bonding pad and a lower bonding pad which are connected to two opposite ends of the resistor, respectively; the half-bridge resistance strain gauge includes two resistors connected in series through a middle bonding pad and an upper bonding pad and a lower bonding pad which are connected to two opposite ends of the two resistors connected in series, respectively; the full-bridge resistance strain gauge includes two half-bridge resistance strain gauges connected in series through a bridging bonding pad.

15. The strain-generating structure of claim 14, wherein in at least one of the strain gauge, a distance between a resistor closest to the concave portion of the corresponding concave-convex structure and the concave portion is less than or equal to a second preset value, and/or a distance between a resistor farthest away from the concave portion of the corresponding concave-convex structure and the concave portion is greater than or equal to a third preset value.

16. The strain-generating structure of claim 14, wherein at least one of the strain body has a plurality of concave-convex structures;
wherein, at least one of the strain gauge is disposed on a combined convex portion formed by connecting or integrating convex portions of the at least one pair of adjacent concave-convex structures;
a distance from at least one resistor of the at least one strain gauge to a center of the combined convex portion is less than or equal to a fourth preset value.

17. The strain-generating structure of claim 1, further comprising:
a first rigid body connected with one end of the strain body;
a second rigid body connected with the other end of the strain body; and,
at least one through groove disposed between the first rigid body and the second rigid body, the at least one through groove and the at least one strain body being alternately arranged along a circumferential direction of the strain-generating structure; wherein
the at least one strain body generates strain when at least one of a force or a torque between the first rigid body and the second rigid body is transmitted to the at least one strain body.

18. The strain-generating structure of claim 17, wherein the through groove is provided with a first groove wall on the first rigid body, and the through groove is provided with a second groove wall on the second rigid body; a contour of at least a portion of the second groove wall matches a contour of at least a portion of the first groove wall.

19. The strain-generating structure of any one of claims 17 to 18, wherein
the at least one strain body includes an elastic structure and a strain beam connected with the elastic structure; one end of the elastic structure is connected with the first rigid body, the other end of the elastic structure is connected with the strain beam, and an end of the strain beam away from the elastic structure is connected with the second rigid body; wherein
the convex portion of at least one of the concave-convex structure of at least one of the strain body is disposed on the strain beam.

20. The strain-generating structure of claim 19, wherein
a smooth and continuous second arc structure is disposed at a connection between the first rigid body and the elastic structure; and/or
a smooth and continuous third arc structure is disposed at a connection between the elastic structure and the strain beam; and/or,
a smooth and continuous fourth arc structure is disposed at a connection between the strain beam and the second rigid body.

21. The strain-generating structure of claim 19, wherein a notch groove penetrates through the elastic structure, a portion of the elastic structure of the notch groove away from a side of the first rigid body extends inwardly along a radial direction of the strain-generating structure and is connected with the strain beam.

22. The strain-generating structure of any one of claims 17 to 18, wherein
the first rigid body has a first assembly portion connected with a first object, and the second rigid body has a second assembly portion connected with a second object;
a force and/or a torque between the first object and the second object is transmitted to the strain-generating structure through the first assembly portion and the second assembly portion.

23. A strain-generating structure, comprising:
at least one strain body configured to generate strain under an external force; wherein
at least one of the strain body has at least one target surface perpendicular to an axis of the strain-generating structure, at least one concave portion is disposed on at least one of the target surface, at least one strain gauge is disposed on a non-concave portion, the strain gauge is configured to sense the strain generated by the strain body; wherein
no strain gauge is disposed on a non-target surface of each strain body.

24. The strain-generating structure of claim 23, wherein a plurality of concave portions are disposed on at least one of the target surface, and at least two strain gauges are disposed at intervals on the target surface between at least one pair of adjacent concave portions.

25. The strain-generating structure of claim 23, wherein the strain-generating structure has a reference plane parallel to an external force input end surface of the at least one strain body, at least one of the concave portion is provided on the strain body and the external force input end surface of the strain body has a fourth orthographic projection on the reference plane, and a cross section of a portion of the at least one strain body corresponding to at least one of the concave portion has a fifth orthographic projection on the reference plane, the fourth orthographic projection covering the fifth orthographic projection.

26. A strain-generating structure, comprising:
a first rigid body, a second rigid body, and at least one strain body connected between the first rigid body and the second rigid body; the at least one strain body is configured to generate strain under an external force;
wherein
the strain body, and a portion of the first rigid body and a portion of the second rigid body connected with the strain body form pathways for transmitting at least one of the force or the torque between the first rigid body and the second rigid body, at least one concave portion is provided on at least one of the pathways, and the at least one strain gauge is provided on a non-concave portion; wherein
the strain gauge is disposed on the strain body and configured to sense the strain generated by the strain body;
the strain-generating structure has a datum plane perpendicular to an axis of the strain-generating structure; each strain gauge of the strain-generating structure is disposed parallel to the datum plane.

27. A strain-generating structure, comprising:
at least one strain body, the strain body includes a strain beam, and the strain beam is configured to generate strain under the external force;
at least one concave portion is disposed on the surface of at least one of the strain body and the at least one strain gauge is disposed on a non-concave portion, each strain gauge is disposed on the strain beam and configured to sense the strain of the strain beam; wherein
the at least one concave portion satisfies the following equation: 0.001H ≤ D ≤ 0.8H, A ≥ W, wherein D denotes a depth of the concave portion, A denotes a width of the concave portion, H denotes a height of the strain beam, and W denotes a width of the strain beam;
the strain-generating structure has a datum plane perpendicular to an axis of the strain-generating structure; each strain gauge of the strain-generating structure is disposed parallel to the datum plane.

28. The strain-generating structure of claim 27, wherein
the strain gauge satisfies the following relation: 0 ≤ P ≤ 0.4L, wherein P denotes a distance between the strain gauge and an edge of the concave portion, and L denotes a length of the strain beam; and/or,
the strain gauge satisfies the following relation: 0 ≤ Q ≤ 0.4W, wherein Q denotes a distance between the strain gauge and a side edge of the strain beam.

29. A preparation method of a strain-generating structure, comprising:
the strain-generating structure includes at least one strain body, a first rigid body connected with one end of the strain body, and a second rigid body connected with the other end of the strain body;
the preparation method comprises: providing at least one through groove in a substrate to form the first rigid body and the second rigid body spaced apart and the at least one strain gauge connecting the first rigid body and the second rigid body;
thinning a portion of a region of the at least one strain body to form at least one concave-convex structure;
and attaching all strain gauges to a convex portion of at least one of the concave-convex structure in a way of being parallel to a datum plane;
wherein the strain gauge is configured to sense the strain generated by the strain body; the datum plane is perpendicular to an axis of the strain-generating structure.

30. A force detection module, comprising the strain-generating structure as claimed in any one of claims 1 to 28 , and a measurement circuit coupled with each strain gauge of the strain-generating structure, the measurement circuit may be configured to measure a direction and a magnitude of at least one of a force or a toque applied to the strain-generating structure based on an electrical signal from at least one of the strain gauge.

31. A force sensor, comprising the force detection module of claim 30.

32. A robot, comprising a force sensor disposed at a position of at least one joint, a robotic arm, or a robotic tie rod of a robot as claimed in claim 31.
